# EUROPEAN PATENT APPLICATION

(11) **EP 4 535 766 A1**
(43) Date of publication of application: **09.04.2025**
(21) Application number: 22949724.3
(22) Date of filing: 04.07.2022
(51) Int. Cl.: H04L 69/085

(54) **DATA TRANSMISSION METHOD AND APPARATUS**

(71) Applicant: Huawei Technologies Co., Ltd., Shenzhen, Guangdong 518129 (CN)
(72) Inventor: WANG, Yali, Shenzhen, Guangdong 518129 (CN); ZHANG, Xudong, Shenzhen, Guangdong 518129 (CN); WANG, Jian, Shenzhen, Guangdong 518129 (CN)
(74) Representative: Gill Jennings & Every LLP
(86) International application number: PCT/CN2022/103759
(87) International publication number: WO 2024/007134

(57) **Abstract**

This application discloses a data transmission method and apparatus. A first device obtains a first data packet, where the first data packet includes data and first information, the first information includes a source network address, a destination network address, a source transport layer port number, and a destination transport layer port number, and the first information corresponds to a first communication protocol (S301); determines second information based on a first mapping relationship, where the second information corresponds to a second communication protocol (S302); the first device generates a second data packet, where the second data packet includes the data, a communication protocol source address, a communication protocol destination address, a communication protocol source port number, and a communication protocol destination port number (S303); and sends the second data packet (S304). **In** the method, addressing and forwarding may be performed on the second data packet based on address information corresponding to the second communication protocol, to transmit data borne in the second data packet to a device corresponding to the destination network address, so that end-to-end communication between a device corresponding to the source network address and the device corresponding to the destination network address can be implemented.

## Description

### TECHNICAL FIELD

This application relates to the field of short-range communication technologies, and in particular, to a data transmission method and apparatus.

### BACKGROUND

Currently, a short-range wireless communication technology is widely used in intelligent vehicles, smart transportation, smart terminals, smart homes, smart manufacturing, and other scenarios. In these scenarios, devices may perform networking based on a communication protocol used by the short-range wireless communication technology (briefly referred to as a short-range wireless communication protocol, for example, a standard short-range wireless communication protocol specified by SparkLink), to form an internal network (or referred to as a private network). The devices in the internal network (briefly referred to as internal network devices) can communicate with each other based on addresses corresponding to the short-range wireless communication protocol (briefly referred to as short-range wireless communication protocol addresses).

When data packet transmission is performed between an internal network device and an external network device, the following scenario exists: The external network device transmits a data packet by using a network address, for example, an internet protocol (Internet Protocol, IP) address, but some internal network devices do not support transmitting the data packet by using the network address. Consequently, end-to-end communication between the external network device and the internal network device is not supported.

### SUMMARY

This application provides a data transmission method and apparatus, to implement end-to-end communication between devices.

According to a first aspect, a data transmission method is provided, including: A first device obtains a first data packet, where the first data packet includes data and first information, the first information includes a source network address, a destination network address, a source transport layer port number, and a destination transport layer port number, and the first information corresponds to a first communication protocol. The first device determines second information based on a first mapping relationship, where the second information corresponds to a second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number. The first device generates a second data packet, where the second data packet includes one or more of the data, the communication protocol source address, the communication protocol destination address, the communication protocol source port number, and the communication protocol destination port number. The first device sends the second data packet.

In the foregoing solution, after receiving the first data packet corresponding to the first communication protocol, the first device converts the first data packet into the second data packet based on the first mapping relationship. Address information (for example, the communication protocol source address, the communication protocol destination address, the communication protocol source port number, and the communication protocol destination port number) carried in the second data packet is address information corresponding to the second communication protocol. Therefore, addressing and forwarding can be performed on the second data packet based on the address information corresponding to the second communication protocol, to transmit data borne in the second data packet to a device corresponding to the destination network address. Finally, end-to-end communication between a device corresponding to the source network address and the device corresponding to the destination network address is implemented, and data transmission reliability can be improved.

In a possible design, the first mapping relationship is predefined. For example, a person skilled in the art configures the first mapping relationship on the first device in advance.

In a possible design, the first mapping relationship is generated by the first device. For example, the first device is a master node or a management node in a network in which the first device is located, and is responsible for allocating the address information corresponding to the second communication protocol to nodes in the network. In this case, after the address information corresponding to the second communication protocol is allocated to the first device, the first mapping relationship may be generated and stored.

In a possible design, the first mapping relationship is from a second device, for example, is sent by the second device to the first device. For example, the second device is the master node or the management node in the network in which the first device is located, and is responsible for allocating the address information corresponding to the second communication protocol to the nodes in the network. In this case, after allocating the address information corresponding to the second communication protocol to the first device, the second device may generate the first mapping relationship and send the first mapping relationship to the first device.

According to any one of the foregoing three designs, the first device can obtain the first mapping relationship, to provide support for conversion between the first information and the second information, so that the data transmission reliability can be further improved.

In a possible design, the first data packet further includes a first quality of service (Quality of Service, QoS) indication field, and the first QoS indication field includes a differentiated services code point (Differentiated Services Code Point, DSCP) or a traffic of class (Traffic of Class). The first mapping relationship further indicates a mapping relationship between the first QoS indication field and a second QoS indication field. The second QoS indication field includes a flow label (Flow Label) and a type of service (Type of Service, ToS). The second data packet further includes the second QoS indication field. In other words, the first device may further convert, based on the first mapping relationship, a QoS parameter (namely, the first QoS indication field) that corresponds to the first communication protocol and that is carried in the first data packet into a QoS parameter (namely, the second QoS indication field) corresponding to the second communication protocol, and carry the QoS parameter (namely, the second QoS indication field) in the second data packet.

According to the foregoing design, the QoS parameter can be converted between different protocols, to ensure QoS of data in a transmission process, and further improve the data transmission reliability.

In a possible design, the first device may determine a layer 2 identifier (Layer 2 Identifier, L2ID) of a next-hop node to the communication protocol destination address and a transport channel identifier (Transport Channel Identifier, TCID) of a transport channel between the first device and the next-hop node based on one or more of the communication protocol source address, the communication protocol destination address, the communication protocol source port number, the communication protocol destination port number, or the second QoS indication field, where the transport channel meets a QoS requirement corresponding to the second QoS indication field; and encapsulates the second data packet based on the L2ID and the TCID to generate a third data packet. The first device further sends the third data packet.

According to the foregoing design manner, the second data packet can be forwarded from the first device to the next-hop node, and during forwarding, the second data packet is borne on the transport channel that can meet the QoS requirement of the second data packet for transmission, to ensure QoS of data transmission, and further improve communication reliability.

In a possible design, the first device may determine the L2ID of the next-hop node to the communication protocol destination address and the TCID of the transport channel between the first device and the next-hop node based on a second mapping relationship, where the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field.

According to the foregoing design manner, when there is already the transport channel that meets the QoS requirement of the second data packet, the first device may determine, from the existing transport channel based on the information carried in the second data packet and the second mapping relationship, the transport channel that meets the QoS requirement of the second data packet, so that transmission efficiency can be improved.

In a possible design, the first device may determine the L2ID of the next-hop node to the communication protocol destination address based on the communication protocol source address and/or the communication protocol destination address. The first device maps the second QoS indication field to a third QoS indication field, establishes the transport channel with the next-hop node based on the communication protocol destination port number, the third QoS indication field, and the L2ID of the next-hop node, and generates the TCID of the transport channel.

According to the foregoing design manner, when there is no transport channel that meets the QoS requirement of the second data packet, the first device may establish the transport channel that meets the QoS requirement of the second data packet, to bear the second data packet, so that the data transmission reliability can be further improved.

In a possible design, after the first device generates the TCID of the transport channel, the first device may further generate the second mapping relationship based on the one or more of the communication protocol source address, the communication protocol destination address, the communication protocol source port number, the communication protocol destination port number, or the second QoS indication field, the L2ID of the next-hop node, and the TCID of the transport channel.

According to the foregoing design manner, when subsequently transmitting a data packet having information that is the same as or similar to the second information, the first device may directly find, based on the second mapping relationship, an L2ID of a next-hop node and a TCID of a transport channel that meet a transmission requirement, to avoid repeatedly establishing the transport channel, thereby saving system resources and improving data transmission efficiency.

In a possible design, the second communication protocol is a standard short-range wireless communication protocol specified by SparkLink.

According to the foregoing design, end-to-end communication between a device in the SparkLink network and a device outside the SparkLink network can be implemented.

In a possible design, the first communication protocol is an IP protocol. Correspondingly, types of the source network address and the destination network address are IP addresses. Types of the source transport layer port number and the destination transport layer port number are TCP/UDP port numbers.

According to the foregoing design, end-to-end transmission of an IP data packet can be implemented.

According to a second aspect, a data transmission method is provided, applied to a first device, where a protocol stack of a second communication protocol is deployed on the first device, and the method includes: The first device transfers a first data packet from a first protocol layer of the protocol stack to a second protocol layer of the protocol stack, where the first data packet includes data and first information, the first information includes a source network address, a destination network address, a source transport layer port number, and a destination transport layer port number, and the first information corresponds to a first communication protocol. The first device determines second information at the second protocol layer of the protocol stack based on a first mapping relationship, where the second information corresponds to the second communication protocol, the second information includes a communication protocol source address, a communication protocol destination address, a communication protocol source port number, and a communication protocol destination port number, and the first mapping relationship indicates one or more a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number. The first device generates a second data packet at the second protocol layer of the protocol stack, where the second data packet includes the data, the communication protocol source address, the communication protocol destination address, the communication protocol source port number, and the communication protocol destination port number. The first device sends the second data packet at a third protocol layer of the protocol stack.

For example, the second communication protocol is a standard short-range wireless communication protocol specified by SparkLink. The first protocol layer may be an application layer in a protocol stack of the standard short-range wireless communication protocol specified by SparkLink, the second protocol layer may be a network layer in the protocol stack of the standard short-range wireless communication protocol specified by SparkLink, and the third protocol layer may be a basic service layer in the protocol stack of the standard short-range wireless communication protocol specified by SparkLink. In addition, the protocol stack of the standard short-range wireless communication protocol specified by SparkLink may further include an access layer. The first data packet may be actually processed by the access layer and sent by the access layer.

According to the foregoing solution, conversion between a parameter of the first communication protocol and a parameter of the second communication protocol can be implemented in the protocol stack (for example, the protocol stack of SparkLink) of the second communication protocol, so that the data packet of the first communication protocol can be borne in a network corresponding to the second communication protocol, end-to-end transmission of the data packet of the first communication protocol is implemented, and data transmission reliability can be improved.

In a possible design, the first mapping relationship is predefined.

In a possible design, the first mapping relationship is generated by the first device at the second protocol layer of the protocol stack.

In a possible design, the first mapping relationship is from a second device, for example, is sent by the second device to the first device.

In a possible design, the first data packet further includes a first quality of service QoS indication field, and the first QoS indication field includes a DSCP or a traffic of class. The first mapping relationship further indicates a mapping relationship between the first QoS indication field and a second QoS indication field, and the second QoS indication field includes a flow label and a ToS. The second data packet further includes the second QoS indication field.

In a possible design, the first device may determine a layer 2 identifier L2ID of a next-hop node to the communication protocol destination address and a transport channel identifier TCID of a transport channel between the first device and the next-hop node at the second protocol layer of the protocol stack based on one or more of the communication protocol source address, the communication protocol destination address, the communication protocol source port number, the communication protocol destination port number, or the second QoS indication field, where the transport channel meets a QoS requirement corresponding to the second QoS indication field. Further, the first device may encapsulate the second data packet at the third protocol layer of the protocol stack based on the L2ID and the TCID to generate a third data packet. The first device sends the third data packet at the third protocol layer of the protocol stack.

In a possible design, the first device may determine the L2ID of the next-hop node to the communication protocol destination address and the TCID of the transport channel between the first device and the next-hop node at the second protocol layer of the protocol stack based on a second mapping relationship, where the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field.

In a possible design, the first device may determine the L2ID of the next-hop node to the communication protocol destination address at the second protocol layer of the protocol stack based on the communication protocol source address and/or the communication protocol destination address. The first device maps the second QoS indication field to a third QoS indication field at the third protocol layer of the protocol stack, establishes the transport channel with the next-hop node based on the communication protocol destination port number, the third QoS indication field, and the L2ID of the next-hop node, and generates the TCID of the transport channel. The first device transfers the TCID from the third protocol layer of the protocol stack to the second protocol layer of the protocol stack.

In a possible design, the first device may further generate the second mapping relationship at the second protocol layer of the protocol stack based on the one or more of the communication protocol source address, the communication protocol destination address, the communication protocol source port number, the communication protocol destination port number, or the second QoS indication field, the L2ID of the next-hop node, and the TCID of the transport channel.

In a possible design, the second communication protocol is a standard short-range wireless communication protocol specified by SparkLink.

In a possible design, types of the source network address and the destination network address are internet protocol IP addresses. Types of the source transport layer port number and the destination transport layer port number are transmission control protocol TCP/user datagram protocol UDP port numbers.

For beneficial effect corresponding to the designs in the second aspect, refer to beneficial effect of the designs corresponding to the first aspect. Details are not described herein again.

According to a third aspect, a data transmission method is provided, including: A first device obtains a data packet, where the data packet includes one or more of data, a source address, a destination address, a source port number, a destination port number, or a QoS indication field. The first device determines a layer 2 identifier L2ID of a next-hop node to the destination address and a TCID of a transport channel between the first device and the next-hop node based on one or more of the source address, the destination address, the source port number, the destination port number, or the QoS indication field, where the transport channel meets a QoS requirement corresponding to the QoS indication field. The first device encapsulates the data packet based on the L2ID and the TCID, and sends the encapsulated data packet.

According to the foregoing solution, the data packet can be forwarded from the first device to the next-hop node, and during forwarding, the data packet is borne on the transport channel that can meet the QoS requirement of the data packet for transmission, to ensure QoS of data transmission, and improve communication reliability.

It may be understood that communication protocols corresponding to the source address, the destination address, the source port number, the destination port number, and the QoS indication field are not limited in this application.

In a possible design, the communication protocols corresponding to the source address, the destination address, the source port number, the destination port number, and the QoS indication field correspond to IP protocols. For example, types of the source address and the destination address are IP addresses, types of the source port number and the destination port number are TCP/UDP port numbers, and the QoS parameter is a DSCP or a traffic of class.

In a possible design, the communication protocols corresponding to the source address, the destination address, the source port number, the destination port number, and the QoS indication field correspond to standard short-range wireless communication protocols specified by SparkLink. For example, types of the source address and the destination address are standard short-range wireless communication protocol addresses specified by SparkLink, types of the source port number and the destination port number are port numbers of a standard short-range wireless communication protocol specified by SparkLink, and the QoS parameter is a ToS in the standard short-range wireless communication protocol specified by SparkLink.

Certainly, the foregoing two protocols are merely examples. There may be another communication protocol actually. This is not limited in this application.

In a possible design, the first device may determine the L2ID of the next-hop node to the destination address and the TCID of the transport channel between the first device and the next-hop node based on a second mapping relationship, where the second mapping relationship indicates a mapping relationship between the L2ID of the next-hop node and the TCID of the transport channel, and the one or more of the source address, the destination address, the source port number, the destination port number, or the QoS indication field.

According to the foregoing design manner, when there is already the transport channel that meets the QoS requirement of the data packet, the first device may determine, from the existing transport channel based on the information carried in the data packet and the second mapping relationship, the transport channel that meets the QoS requirement of the data packet, so that transmission efficiency can be improved.

In a possible design, the first device may determine the L2ID of the next-hop node to the destination address based on the source address and/or the destination address. The first device establishes the transport channel with the next-hop node based on the destination port number, the QoS indication field, and the L2ID of the next-hop node, and generates the TCID of the transport channel.

According to the foregoing design manner, when there is no transport channel that meets the QoS requirement of the data packet, the first device may establish the transport channel that meets the QoS requirement of the data packet, to bear the data packet, so that data transmission reliability can be further improved.

In a possible design, after the first device generates the TCID of the transport channel, the first device may further generate the second mapping relationship based on the one or more of the source address, the destination address, the source port number, the destination port number, or the QoS indication field, the L2ID of the next-hop node, and the TCID of the transport channel.

According to the foregoing design manner, when subsequently transmitting a data packet having a same QoS requirement, a same destination address, a same destination port number, and/or the like, the first device may directly find, based on the second mapping relationship, an L2ID of a next-hop node and a TCID of a transport channel that meet a transmission requirement, to avoid repeatedly establishing the transport channel, thereby saving system resources and improving data transmission efficiency.

In a possible design, types of the source address and the destination address are IP addresses.

When the destination address is an address of the next-hop node (that is, a transmission route is a single-hop route), the encapsulated data packet includes the L2ID, the TCID, the source address, and the destination address, that is, the standard short-range wireless communication protocol address specified by SparkLink corresponding to the source address, and the standard short-range wireless communication protocol address specified by SparkLink corresponding to the destination address may not be encapsulated in the data packet. In this way, header overheads can be reduced.

When the destination address is not an address of the next-hop node (that is, a transmission route is a multi-hop route), the encapsulated data packet includes the L2ID, the TCID, the source address, the destination address, the standard short-range wireless communication protocol address specified by SparkLink corresponding to the source address, and the standard short-range wireless communication protocol address specified by SparkLink corresponding to the destination address. In this way, transmission reliability can be ensured.

According to a fourth aspect, a data transmission apparatus is provided. The apparatus is a first device or a chip in the first device, and the apparatus includes modules/units/technical means configured to perform the method according to the first aspect or any possible design of the first aspect.

For example, the apparatus may include:
an obtaining unit, configured to obtain a first data packet, where the first data packet includes data and first information, the first information includes a source network address, a destination network address, a source transport layer port number, and a destination transport layer port number, and the first information corresponds to a first communication protocol;
a processing unit, configured to: determine second information based on a first mapping relationship, where the second information corresponds to a second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number; and generate a second data packet, where the second data packet includes one or more of the data, the communication protocol source address, the communication protocol destination address, the communication protocol source port number, and the communication protocol destination port number; and
a sending unit, configured to send the second data packet.

In a possible design, the first mapping relationship is predefined.

In a possible design, the first mapping relationship is generated by the apparatus.

In a possible design, the first mapping relationship is from a second device, for example, is sent by the second device to the apparatus.

In a possible design, the first data packet further includes a first QoS indication field, and the first QoS indication field includes a DSCP or a traffic of class. The first mapping relationship further indicates a mapping relationship between the first QoS indication field and a second QoS indication field, and the second QoS indication field includes a flow label Flow Label and a type of service ToS. The second data packet further includes the second QoS indication field.

In a possible design, the processing unit is configured to: determine a layer 2 identifier L2ID of a next-hop node to the communication protocol destination address and a transport channel identifier TCID of a transport channel between the apparatus and the next-hop node based on one or more of the communication protocol source address, the communication protocol destination address, the communication protocol source port number, the communication protocol destination port number, or the second QoS indication field, where the transport channel meets a QoS requirement corresponding to the second QoS indication field; and encapsulate the second data packet based on the L2ID and the TCID to generate a third data packet. The sending unit is configured to send the third data packet.

In a possible design, the processing unit is configured to determine the L2ID of the next-hop node to the communication protocol destination address and the TCID of the transport channel between the apparatus and the next-hop node based on a second mapping relationship, where the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field.

In a possible design, the processing unit is configured to: determine the L2ID of the next-hop node to the communication protocol destination address based on the communication protocol source address and/or the communication protocol destination address; and map the second QoS indication field to a third QoS indication field, establish the transport channel with the next-hop node based on the communication protocol destination port number, the third QoS indication field, and the L2ID of the next-hop node, and generate the TCID of the transport channel.

In a possible design, the processing unit is further configured to: after generating the TCID of the transport channel, generate the second mapping relationship based on the one or more of the communication protocol source address, the communication protocol destination address, the communication protocol source port number, the communication protocol destination port number, or the second QoS indication field, the L2ID of the next-hop node, and the TCID of the transport channel.

In a possible design, the second communication protocol is a standard short-range wireless communication protocol specified by SparkLink.

In a possible design, types of the source network address and the destination network address are internet protocol IP addresses. Types of the source transport layer port number and the destination transport layer port number are TCP/UDP port numbers.

According to a fifth aspect, a data transmission apparatus is provided. The apparatus is a first device or a chip in the first device, and the apparatus includes modules/units/technical means configured to perform the method according to the second aspect or any possible design of the second aspect.

For example, the apparatus may include:
a first protocol layer module, configured to transfer a first data packet to a second protocol layer module, where the first data packet includes data and first information, the first information includes a source network address, a destination network address, a source transport layer port number, and a destination transport layer port number, and the first information corresponds to a first communication protocol;
the second protocol layer module, configured to: determine second information based on a first mapping relationship, where the second information corresponds to a second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number; and generate a second data packet, where the second data packet includes one or more of the data, the communication protocol source address, the communication protocol destination address, the communication protocol source port number, and the communication protocol destination port number; and
a third protocol layer module, configured to send the second data packet.

In a possible design, the first mapping relationship is predefined.

In a possible design, the first mapping relationship is generated by the second protocol layer module.

In a possible design, the first mapping relationship is from a second device, for example, is sent by the second device to the apparatus.

In a possible design, the first data packet further includes a first quality of service QoS indication field, and the first QoS indication field includes a DSCP or a traffic of class. The first mapping relationship further indicates a mapping relationship between the first QoS indication field and a second QoS indication field, and the second QoS indication field includes a flow label and a ToS. The second data packet further includes the second QoS indication field.

In a possible design, the second protocol layer module is configured to determine a layer 2 identifier L2ID of a next-hop node to the communication protocol destination address and a transport channel identifier TCID of a transport channel between the apparatus and the next-hop node based on one or more of the communication protocol source address, the communication protocol destination address, the communication protocol source port number, the communication protocol destination port number, or the second QoS indication field, where the transport channel meets a QoS requirement corresponding to the second QoS indication field. The third protocol layer module is configured to encapsulate the second data packet based on the L2ID and the TCID to generate a third data packet, and the third protocol layer module is configured to send the third data packet.

In a possible design, the second protocol layer module is configured to determine the L2ID of the next-hop node to the communication protocol destination address and the TCID of the transport channel between the apparatus and the next-hop node based on a second mapping relationship, where the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field.

In a possible design, the second protocol layer module is configured to determine the L2ID of the next-hop node to the communication protocol destination address based on the communication protocol source address and/or the communication protocol destination address. The third protocol layer module is configured to: map the second QoS indication field to a third QoS indication field, establish the transport channel with the next-hop node based on the communication protocol destination port number, the third QoS indication field, and the L2ID of the next-hop node, and generate the TCID of the transport channel. The third protocol layer module is configured to transfer the TCID to the second protocol layer module.

In a possible design, the second protocol layer module is further configured to: generate the second mapping relationship based on the one or more of the communication protocol source address, the communication protocol destination address, the communication protocol source port number, the communication protocol destination port number, or the second QoS indication field, the L2ID of the next-hop node, and the TCID of the transport channel.

In a possible design, the second communication protocol is a standard short-range wireless communication protocol specified by SparkLink.

In a possible design, types of the source network address and the destination network address are internet protocol IP addresses. Types of the source transport layer port number and the destination transport layer port number are transmission control protocol TCP/user datagram protocol UDP port numbers.

According to a sixth aspect, a data transmission apparatus is provided. The apparatus is a first device or a chip in the first device, and the apparatus includes modules/units/technical means configured to perform the method according to the third aspect or any possible design of the third aspect.

For example, the apparatus may include:
an obtaining unit, configured to obtain one or more of a data packet, where the data packet includes data, a source address, a destination address, a source port number, a destination port number, and a QoS indication field;
a processing unit, configured to: determine a layer 2 identifier L2ID of a next-hop node to the destination address and a TCID of a transport channel between the apparatus and the next-hop node based on one or more of the source address, the destination address, the source port number, the destination port number, or the QoS indication field, where the transport channel meets a QoS requirement corresponding to the QoS indication field; and encapsulate the data packet based on the L2ID and the TCID; and
a sending unit, configured to send the encapsulated data packet.

In a possible design, the processing unit is configured to determine the L2ID of the next-hop node to the destination address and the TCID of the transport channel between the apparatus and the next-hop node based on a second mapping relationship, where the second mapping relationship indicates a mapping relationship between the L2ID of the next-hop node and the TCID of the transport channel, and the one or more of the source address, the destination address, the source port number, the destination port number, or the QoS indication field.

In a possible design, the processing unit is configured to: determine the L2ID of the next-hop node to the destination address based on the source address and/or the destination address; and establish the transport channel with the next-hop node based on the destination port number, the QoS indication field, and the L2ID of the next-hop node, and generate the TCID of the transport channel.

In a possible design, the processing unit is further configured to: after generating the TCID of the transport channel, generate the second mapping relationship based on the one or more of the source address, the destination address, the source port number, the destination port number, or the QoS indication field, the L2ID of the next-hop node, and the TCID of the transport channel.

In a possible design, types of the source address and the destination address are IP addresses, types of the source port number and the destination port number are TCP/UDP port numbers, and the QoS parameter is a DSCP or a traffic of class.

In a possible design, types of the source address and the destination address are standard short-range wireless communication protocol addresses specified by SparkLink, types of the source port number and the destination port number are port numbers of a standard short-range wireless communication protocol specified by SparkLink, and the QoS parameter is a ToS in the standard short-range wireless communication protocol specified by SparkLink.

In a possible design, the types of the source address and the destination address are the IP addresses.

The destination address is an address of the next-hop node, and the encapsulated data packet includes the L2ID, the TCID, the source address, and the destination address; or
the destination address is not an address of the next-hop node; and the encapsulated data packet includes the L2ID, the TCID, the source address, the destination address, the standard short-range wireless communication protocol address specified by SparkLink corresponding to the source address, and the standard short-range wireless communication protocol address specified by SparkLink corresponding to the destination address.

According to a seventh aspect, a data transmission apparatus is provided, including at least one processor and an interface circuit. The interface circuit is configured to: receive a signal from an apparatus other than the apparatus and send the signal to the processor, or send a signal from the processor to an apparatus other than the apparatus, and the processor is configured to implement, by using a logic circuit or by executing code instructions, the method according to the first aspect or any design of the first aspect, the method according to the second aspect or any design of the second aspect, or the method according to the third aspect or any design of the third aspect.

According to an eighth aspect, a computer-readable storage medium is provided. The storage medium stores a computer program or instructions, and when the computer program or the instructions are executed by a communication apparatus, the method according to the first aspect or any design of the first aspect, the method according to the second aspect or any design of the second aspect, or the method according to the third aspect or any design of the third aspect is implemented.

According to a ninth aspect, a computer program product is provided. The computer program product stores instructions, and when the instructions are run on a computer, the computer is enabled to perform the method according to the first aspect or any design of the first aspect, the method according to the second aspect or any design of the second aspect, or the method according to the third aspect or any design of the third aspect.

### BRIEF DESCRIPTION OF DRAWINGS

FIG. 1A to FIG. 1C are diagrams of application scenarios according to an embodiment of this application;
FIG. 2A and FIG. 2B each are a diagram of a network architecture of a communication system according to an embodiment of this application;
FIG. 3 is a flowchart of a data transmission method according to an embodiment of this application;
FIG. 4 is a flowchart of another data transmission method according to an embodiment of this application;
FIG. 5A and FIG. 5B are a diagram of a protocol stack of a SparkLink protocol according to an embodiment of this application;
FIG. 6 is a diagram of a relationship between related function units in a SparkLink protocol stack;
FIG. 7A is a diagram in which an internal network device receives an IP data packet sent by an external network device in a single-hop scenario;
FIG. 7B-1 and FIG. 7B-2 are a diagram in which an internal network device sends an IP data packet to an external network device in a single-hop scenario;

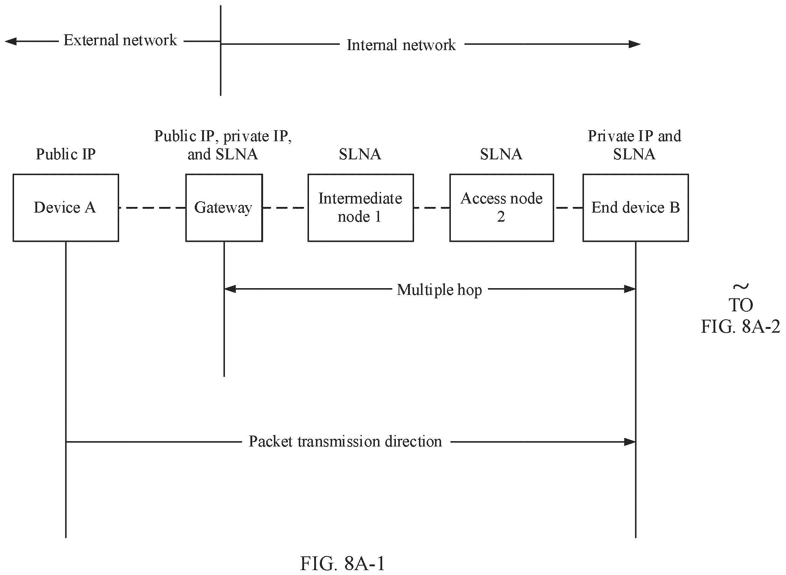

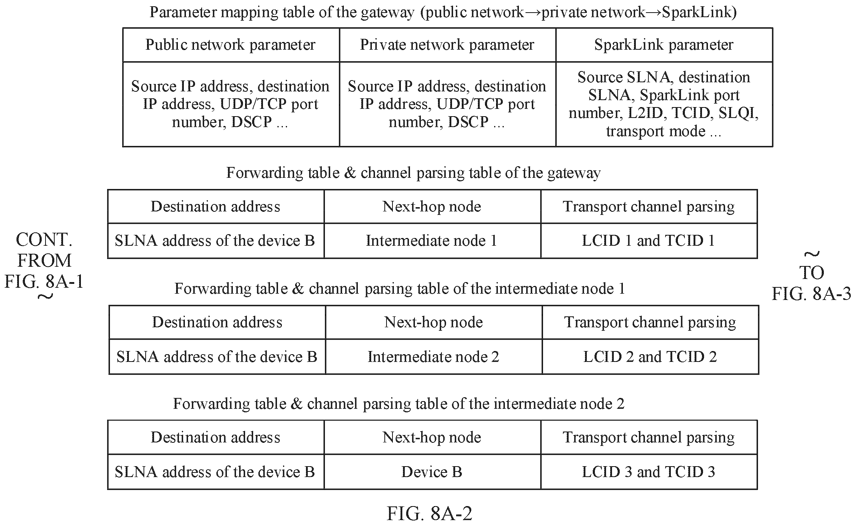

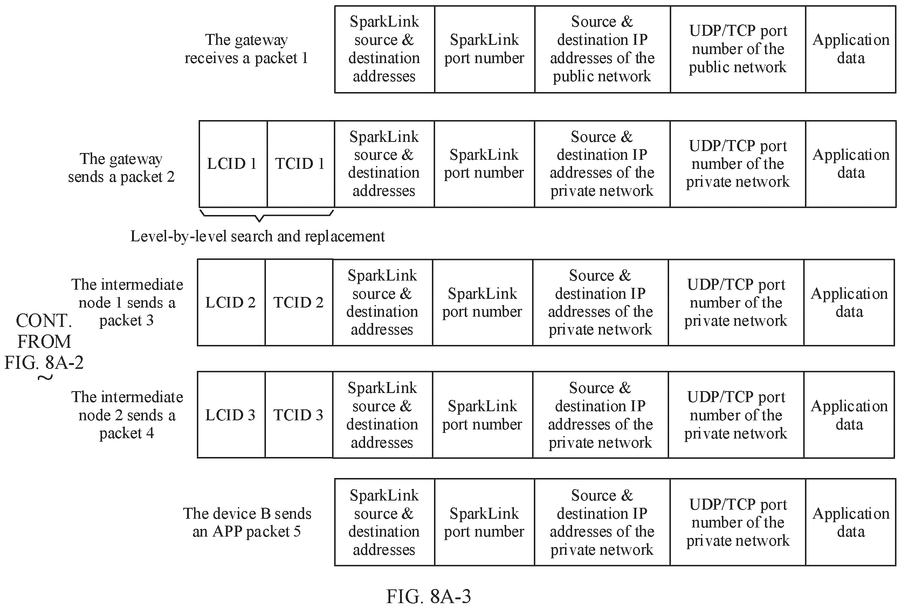

FIG. 8A-1 to FIG. 8A-3 are a diagram in which an internal network device receives an IP data packet sent by an external network device in a multi-hop scenario;

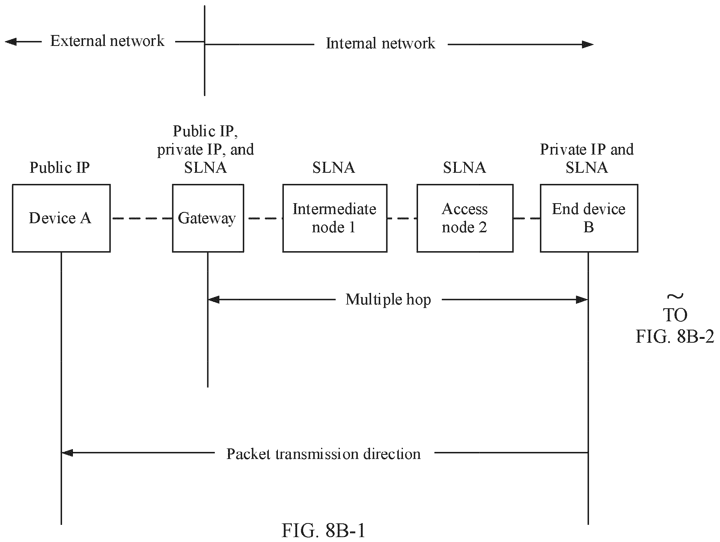

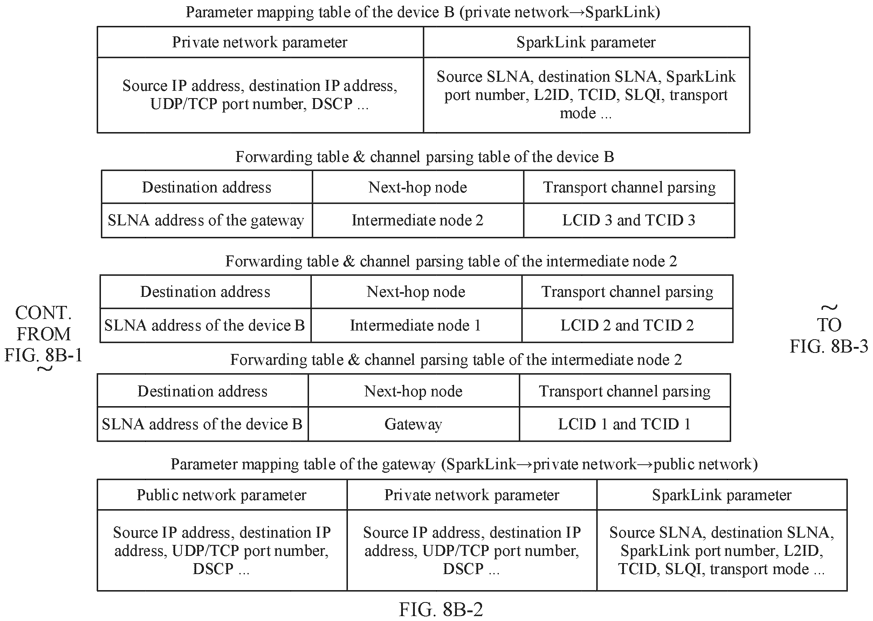

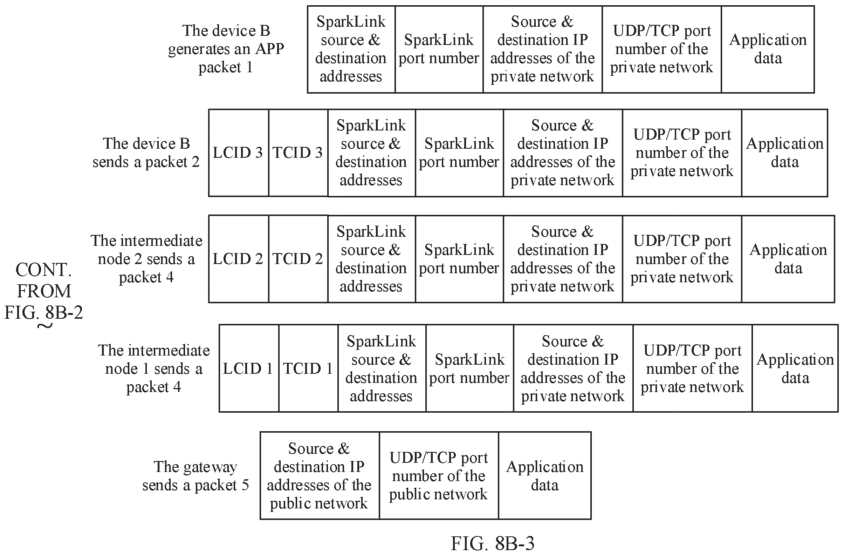

FIG. 8B-1 to FIG. 8B-3 are a diagram in which an internal network device sends an IP data packet to an external network device in a multi-hop scenario;

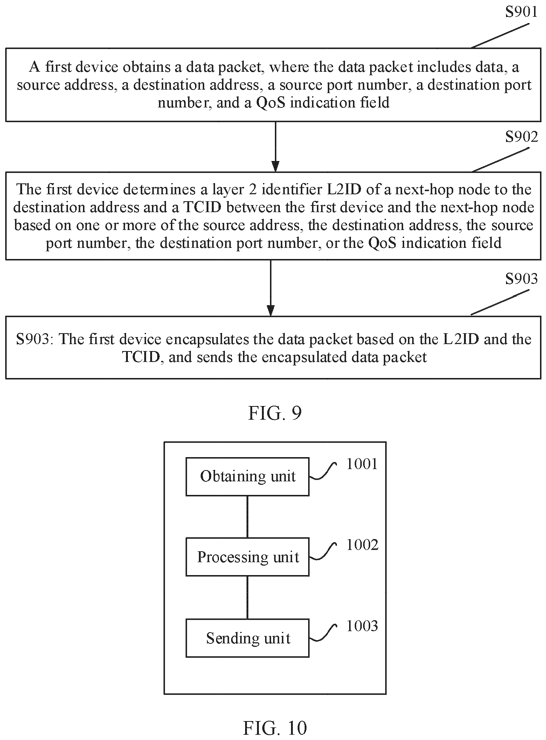

FIG. 9 is a flowchart of another data transmission method according to an embodiment of this application;
FIG. 10 is a diagram of a structure of a data transmission apparatus according to an embodiment of this application;

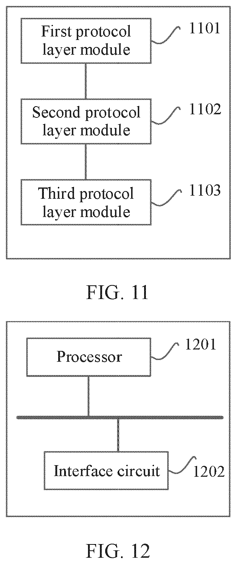

FIG. 11 is a diagram of a structure of another data transmission apparatus according to an embodiment of this application; and
FIG. 12 is a diagram of a structure of another data transmission apparatus according to an embodiment of this application.

### DESCRIPTION OF EMBODIMENTS

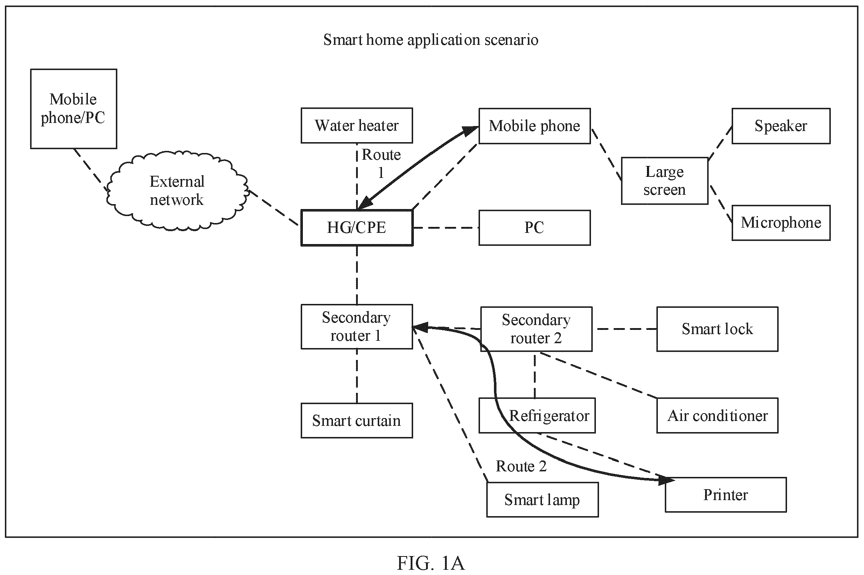

FIG. 1A is a diagram of an application scenario according to an embodiment of this application. In a smart home application scenario, home devices include mobile phones, personal computers (Personal Computer, PC), large screens (for example, televisions), printers, air conditioners, smart curtains, smart locks, smart lamps, secondary routers, water heaters, and the like.

The home devices may perform networking based on a short-range wireless communication technology, to form a network, which is referred to as an internal network or a private network in this application. A short-range wireless communication protocol address may be allocated to each of the home devices in the internal network, and the home devices communicate with each other in the internal network based on the short-range wireless communication protocol addresses.

The home device communicates with an external network through a gateway. The gateway is, for example, a home gateway (Home Gateway, HG) or customer-premises equipment (Customer-Premises Equipment, CPE) having a gateway function. A data packet sent by an external network device needs to be forwarded to the home device through the gateway, and a data packet sent by the home device also needs to be forwarded to the external network through the gateway.

Usually, the external network device may transmit the data packet based on an IP address. Because different IP applications have different quality of service (Quality of Service, QoS) requirements, the internal network is required to establish a single-hop route (for example, a route 1 shown in FIG. 1A) or a multi-hop route (for example, a route 2 shown in FIG. 1A) based on different IP application QoS requirements.

However, in a smart home application scenario, some devices such as a refrigerator, a smart curtain, a smart lamp, a smart lock, an air conditioner, and a water heater do not support the IP address, and cannot forward an IP data packet based on the IP address. As a result, end-to-end communication between the external network device and an internal network device is not supported.

For example, in the scenario shown in FIG. 1A, the refrigerator in the route 2 does not support the IP address, while the printer and the secondary router 1 support the IP address. When the printer needs to send an IP data packet to an external network device (for example, a mobile phone/PC), or when the external network device (for example, the mobile phone/PC) needs to send an IP data packet to the printer, the IP data packet should be forwarded by the refrigerator. However, because the refrigerator does not support the IP address, the IP data packet cannot be forwarded, causing an end-to-end communication failure between the printer and the mobile phone/PC in the external network.

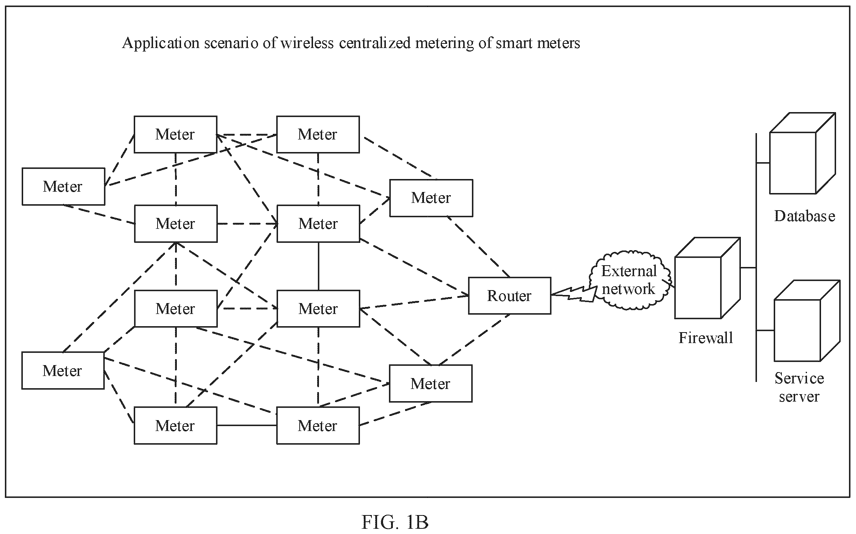

FIG. 1B is a diagram of another scenario according to an embodiment of this application. In a scenario of wireless centralized metering of smart meters, a plurality of meters may form an internal network, and a service server is in an external network. When collecting data of the meters, the service server needs to exchange data packets with the meters in the internal network, and if the external network device and the internal network device separately support data packets of different protocols, end-to-end communication between the external network device and the internal network device cannot be supported either.

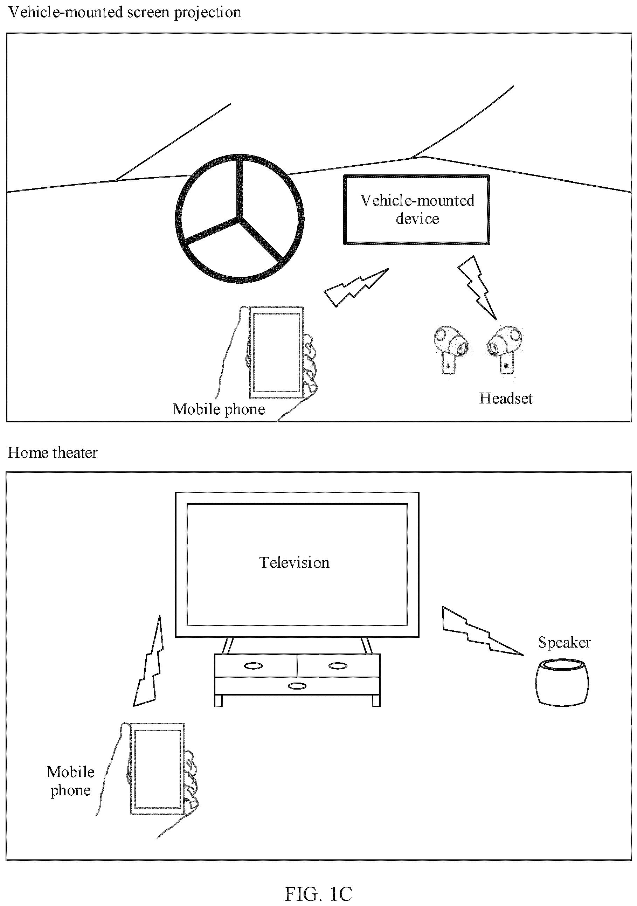

FIG. 1C is a diagram of another scenario according to an embodiment of this application. In a wireless screen projection application scenario like specifically vehicle-mounted screen projection, a mobile phone needs to transmit data to a headset through a vehicle-mounted device. Alternatively, specifically, in a home theater scenario, a mobile phone needs to transmit data to a speaker through a large-screen device (for example, a television). In these scenarios, if different devices separately support data packets of different protocols, end-to-end communication cannot be supported either.

It may be understood that the several scenarios shown in FIG. 1A to FIG. 1C are merely examples, and there may be other application scenarios actually.

For example, in the scenarios shown in FIG. 1A to FIG. 1C, because different devices (for example, the internal network device and the external network device) support addresses corresponding to different communication protocols, a data packet cannot be borne and transmitted between the devices, and the end-to-end communication cannot be performed between the devices.

In view of this, an embodiment of this application provides a data transmission solution, to implement end-to-end communication between devices in a scenario in which different devices support addresses corresponding to different communication protocols.

Embodiments of this application may be applied to various wireless communication scenarios, especially short-range wireless communication scenarios, for example, including but not limited to intelligent vehicles, smart transportation, smart terminals, smart homes, smart manufacturing, and other scenarios. The short-range wireless communication technology may include a conventional short-range wireless communication technology, for example, a Bluetooth (Bluetooth) technology, a Bluetooth low energy (Bluetooth Low Energy, BLE) technology, a wireless fidelity (Wireless Fidelity, Wi-Fi) technology, a near field communication (Near Field Communication, NFC) technology, an ultra-wideband (Ultra-wideband, UWB) technology, a universal short-range communication technology, or the like, and may also include an evolving communication technology or another communication technology that may emerge in the future, for example, a short-range wireless communication technology specified by SparkLink (briefly referred to as SparkLink (SparkLink) technology). The SparkLink technology includes a SparkLink basic (SparkLink Basic, SLB) technology, a SparkLink low energy (SparkLink Basic, SLE) technology, and the like. This is not limited in this application.

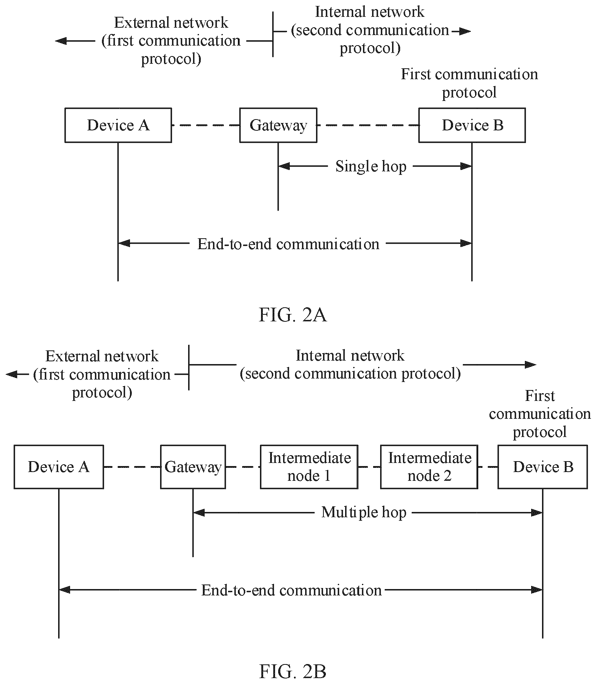

For example, FIG. 2A is a diagram of a network architecture of a communication system according to an embodiment of this application. In the system, a device A and a device B perform end-to-end communication. The device A is located in an external network, the device B is located in an internal network, and a gateway connects the internal network and the external network. The device in the external network supports a first communication protocol, all devices in the internal network support a second communication protocol, and some devices (for example, the device B) support the first communication protocol. Therefore, end-to-end communication between the device A and the device B may also be referred to as end-to-end communication (for example, IP end-to-end communication) based on the first communication protocol. In the network architecture shown in FIG. 2A, there is no intermediate node between the gateway and the device B, namely, a single-hop route. Certainly, there may be another node between the device A and the gateway. This is not limited in this application.

For example, FIG. 2B is a diagram of a network architecture of another communication system according to an embodiment of this application. In the system, a device A and a device B perform end-to-end communication. The device A is located in an external network, the device B is located in an internal network, and a gateway connects the internal network and the external network. The device in the external network supports a first communication protocol, all devices in the internal network support a second communication protocol, and some devices (for example, the device B) support the first communication protocol. Different from FIG. 2A, in the scenario shown in FIG. 2B, the gateway and the device B cannot directly communicate with each other, and another node further needs to be passed through, namely, a multi-hop route. An intermediate node 1 and/or an intermediate node 2 support/supports the second communication protocol, and may not support the first communication protocol.

It may be understood that the foregoing is merely an example. In actual application, there may be fewer or more intermediate nodes between the gateway and the device B. This is not limited in this application.

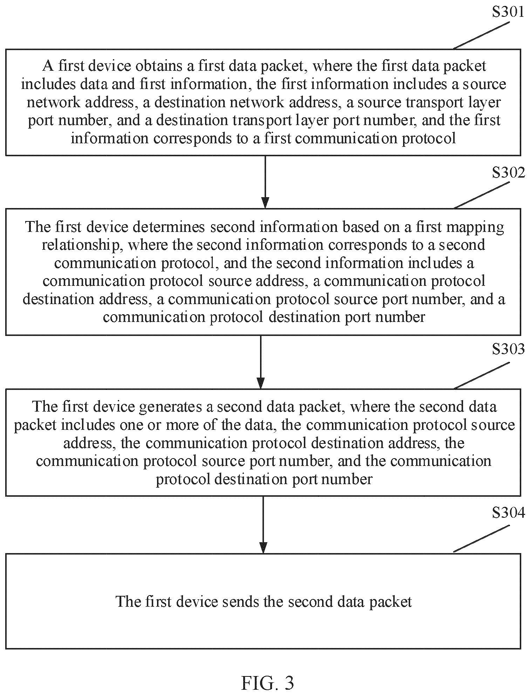

FIG. 3 shows a data transmission method according to an embodiment of this application. The method includes:

S301: A first device obtains a first data packet, where the first data packet includes data and first information, the first information includes a source network address, a destination network address, a source transport layer port number, and a destination transport layer port number, and the first information corresponds to a first communication protocol.

The first device may be a source end device (namely, a device corresponding to the source network address) of the first data packet, or may be an intermediate device between the source end device and a destination end device (namely, a device corresponding to the destination network address) of the first data packet. In other words, the first device needs to send or forward the first data packet. The scenario shown in FIG. 2A or FIG. 2B is used as an example. When the first data packet is a packet sent by the device A to the device B, the first device may be the gateway. When the first data packet is a packet sent by the device B to the device A, the first device may be the device B.

When the first device is the source end device, a manner in which the first device obtains the first data packet may be generating the first data packet. When the first device is the intermediate device, a manner in which the first device obtains the first data packet may be receiving the first data packet from the source end device or an intermediate device.

Usually, in addition to the data, the data packet carries address information used for routing and addressing, for example, a source address, a destination address, a source port number, and a destination port number. The address information is usually borne in a header of the data packet. In different communication protocols, expression forms of the address information may be different. For example, the source network address, the destination network address, the source transport layer port number, and the destination transport layer port number in this embodiment of this application are respectively corresponding expression forms of the source address, the destination address, the source port number, and the destination port number in the first communication protocol.

For example, when the first communication protocol is an IP protocol, the source network address, the destination network address, the source transport layer port number, and the destination transport layer port number may be respectively a source IP address, a destination IP address, a source transmission control protocol (Transmission Control Protocol, TCP)/user datagram protocol (User Datagram Protocol, UDP) port number, and a destination TCP/UDP port number.

It may be understood that the IP protocol herein is merely an example. In actual application, the first communication protocol may alternatively be another protocol. This is not limited in this application.

S302: The first device determines second information based on a first mapping relationship, where the second information corresponds to a second communication protocol, and the second information includes a communication protocol source address, a communication protocol destination address, a communication protocol source port number, and a communication protocol destination port number.

It may be understood that the source network address, the destination network address, the source transport layer port number, and the destination transport layer port number are respectively corresponding expression forms of the source address, the destination address, the source port number, and the destination port number of the data packet in the second communication protocol. For example, if the second communication protocol is a short-range wireless communication protocol like specifically a SparkLink protocol, the communication protocol source address, the communication protocol destination address, the communication protocol source port number, and the communication protocol destination port number are respectively a SparkLink source address, a SparkLink destination address, a SparkLink source port number, and a SparkLink destination port number. It may be understood that, for ease of description in this application, the SparkLink protocol is mainly used as an example. The second communication protocol may alternatively be another protocol actually. This is not limited in this application.

For ease of description, the following uses an example in which the first communication protocol is mainly the IP protocol and an example in which the second communication protocol is mainly the SparkLink protocol. In addition, for ease of description, in this embodiment of this application, an address corresponding to the IP protocol may be referred to as an IP address, a port corresponding to the IP protocol may be referred to as an IP port, an address corresponding to the SparkLink protocol may be referred to as a SparkLink address or a SparkLink domain address (which may be indicated by an SLNA), and a port corresponding to the SparkLink protocol may be referred to as a SparkLink port or a SparkLink domain port.

Because the first information and the second information are different expression forms of same information in different communication protocols, there is a mapping relationship between each piece of information in the first information and each piece of information in the second information.

In this embodiment of this application, the mapping relationship between each piece of information in the first information and each piece of information in the second information is specifically indicated by the first mapping relationship. For example, the first mapping relationship includes but not limited to one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number.

In this embodiment of this application, the first mapping relationship may be implemented in a plurality of manners. For example, Table 1 is a possible example of the first mapping relationship.

**Table 1**

| Source networ k addr ess | Destinat ion net work ad dress | Source tr ansport la yer port number | Destination transport layer port number | Communic ation proto col source address | Communicat ion protocol destination address | Communication protocol sourc e port number | Communica tion protoc ol destinati on port nu mber |
|---|---|---|---|---|---|---|---|
| IP SA 1 | IP DA 1 | IP S-port 1 | IP D-port 2 | SLNA SA 1 | SLNA DA 1 | SLNA S-port 1 | SLNA D-p ort 2 |

During specific implementation, one table may store a plurality of groups of mapping relationships that respectively correspond to different combinations of <source network address, destination network address, source transport layer port number, destination transport layer port number, communication protocol source address, communication protocol destination address, communication protocol source port number, communication protocol destination port number>. The first mapping relationship is one group of mapping relationships, for example, as shown in Table 2.

**Table 2**

| N o. | Source netwo rk add ress | Destinat ion net work a ddress | Source tr ansport la yer port number | Destination transport layer port number | Communic ation proto col source address | Communica tion protoc ol destinati on address | Communicat ion protocol source por t number | Communicati on protocol destination p ort number |
|---|---|---|---|---|---|---|---|---|
| 1 | IP SA 1 | IP DA 1 | IP S-port 1 | IP D-port 2 | SLNA SA 1 | SLNA DA 1 | SLNA S-po rt 1 | SLNA D-por t 2 |
| 2 | IP SA 3 | IP DA 4 | IP S-port 3 | IP D-port 4 | SLNA SA 3 | SLNA DA 4 | SLNA S-po rt 3 | SLNA D-por t 4 |
| ... | ... | ... | ... | ... | ... | ... | ... | ... |

Correspondingly, the first device may determine the first mapping relationship by thoroughly searching the table (for example, Table 1 or Table 2). For example, if the first data packet carries IP SA 1, IP DA 1, IP S-port 1, and IP D-port 2, the first device searches the table, and SLNA SA 1, SLNA DA 1, SLNA S-port 1, and SLNA D-port 2 that correspond to the IP SA 1, IP DA 1, IP S-port 1, and IP D-port 2 may be determined.

It may be understood that Table 1 and Table 2 are used to search for a SparkLink parameter based on an IP parameter or search for the IP parameter based on the SparkLink parameter. Therefore, Table 1 and Table 2 may be referred to as a parameter mapping table, an address translation table, or the like. Certainly, this is merely an example herein, and there may alternatively be another name actually.

S303: The first device generates a second data packet, where the second data packet includes one or more of the data, the communication protocol source address, the communication protocol destination address, the communication protocol source port number, and the communication protocol destination port number. In a design, the second data packet includes the data, the communication protocol source address, the communication protocol destination address, the communication protocol source port number, and the communication protocol destination port number.

For example, the first device may encapsulate the communication protocol source address, the communication protocol destination address, the communication protocol source port number, and the communication protocol destination port number into the header of the first data packet, to obtain the second data packet.

It should be noted that, when the destination end device (namely, the device corresponding to the destination network address) supports the second communication protocol, the communication protocol destination address is a communication protocol address of the destination end device. When the destination end device (namely, the device corresponding to the destination network address) does not support the second communication protocol, the communication protocol destination address may be a communication protocol address of a node (for example, the gateway) to the destination end device that supports the second communication protocol.

Similarly, when the source end device (namely, the device corresponding to the source network address) supports the second communication protocol, the communication protocol source address may be a communication protocol address of the source end device. When the source end device (namely, the device corresponding to the source network address) does not support the second communication protocol, the communication protocol source address may be a communication protocol address of a node (for example, the gateway) to the destination end device that supports the second communication protocol.

The scenario shown in FIG. 2B is used as an example, and an example in which the second communication protocol is the SparkLink protocol and the first communication protocol is the IP protocol is used. The internal network is a network formed based on the SparkLink protocol, and therefore may be referred to as a SparkLink domain. A management node (a node M) in the SparkLink domain may allocate an SLNA and/or a service address (including an IP address) to a node in the SparkLink domain, and the node M maintains an address mapping entry <L2ID, SLNA/service address>. An address resolver (Address Resolver) node (briefly referred to as a node A) in the SparkLink domain may synchronize the address mapping entry from the node M, or the allocated SLNA and/or service address are/is registered with the node A by using a node address registration mechanism. The node A is responsible for translation between a non-SparkLink address and the SparkLink address, and the virtual function can be implemented on an edge router or a gateway device of the SparkLink network.

When the device B in the SparkLink domain sends an IP data packet (the first data packet) to the external network device A, the destination network address is a public IP address of the external network, and the source network address is a public/private IP address of the device B. The device B may obtain, by querying the node A, that the destination address is a SparkLink address corresponding to the public/private IP address of the device A, namely, an SLNA of the gateway (the CPE). The node B may encapsulate <CPE-SLNA, B-SLNA, A-IP, B-IP>. After receiving a SparkLink data packet (the second data packet) carrying <CPE-SLNA, B-SLNA, A-ip, B-IP>, the gateway hits CPE-SLNA, parses the address in the IP header, and if B-IP is the private IP, translates B-IP into a public IP of the CPE for forwarding; or if B-IP is the public IP, directly forwards the packet.

On the contrary, when the external network device A sends an IP data packet (the first data packet) to the internal network device B, the IP destination address is the public IP address of the device B in the SparkLink domain, and the source IP address is the public IP address of the external network device A. After receiving the IP data packet (the first data packet), the gateway (the first device) obtains, through querying, that the destination network address is the IP address of the device B in the SparkLink domain, obtains the SparkLink address B-SLNA of the device B through address translation, encapsulates the destination SLNA address into B-SLNA, and encapsulates the source SLNA address into CPE-SLNA. In this case, a format of the encapsulated packet is <B-SLNA, CPE-SLNA, B-IP, A-IP>.

A similar method may also be used for port number translation. Details are not described herein again.

It may be understood that, for ease of description in this specification, a data packet encapsulated with information related to the SparkLink protocol (for example, the SparkLink source address, the SparkLink destination address, the SparkLink source port number, the SparkLink destination port number, and/or a SparkLink QoS parameter) is referred to as the SparkLink data packet. There may alternatively be another name actually. For example, when the data packet carries the IP address and the SparkLink address, the data packet may also be considered as the IP data packet.

S304: The first device sends the second data packet.

Address information (for example, the communication protocol source address, the communication protocol destination address, the communication protocol source port number, and the communication protocol destination port number) carried in the second data packet is address information corresponding to the second communication protocol. Therefore, after the first device sends the second data packet, a device that receives the second data packet may perform addressing and forwarding on the second data packet based on the address information corresponding to the second communication protocol, to transmit data borne in the second data packet to the device corresponding to the destination network address. Finally, end-to-end communication between the device corresponding to the source network address and the device corresponding to the destination network address is implemented, and data transmission reliability is improved.

The scenario shown in FIG. 2B is used as an example. The first device is the gateway, the destination network address is a network address of the device B, the intermediate node 1 and the intermediate node 2 support the SparkLink protocol but do not support the IP protocol, and the device B supports the IP protocol and the SparkLink protocol. If the first data packet is the IP data packet (carrying the source IP address, the destination IP address, the source TCP/UDP port number, and the destination TCP/UDP port number) from the device A, after receiving the IP data packet, the gateway may convert the IP data packet into the SparkLink data packet (namely, the data packet carrying the SparkLink source address, the SparkLink destination address, the SparkLink source port number, and the SparkLink destination port number) based on the first mapping relationship. Further, after receiving the SparkLink data packet, the intermediate node 1 and the intermediate node 2 may forward the SparkLink data packet based on the address information (namely, the SparkLink source address, the SparkLink destination address, the SparkLink source port number, and the SparkLink destination port number) carried in the SparkLink data packet. Finally, the SparkLink data packet may be forwarded to the device B, and end-to-end communication between the device A and the device B is further implemented.

Optionally, the source network address, the destination network address, the source transport layer port number, the destination transport layer port number, and/or the like in the first data packet may be retained in the second data packet. The scenario shown in FIG. 2B is used as an example. When the device B sends the IP data packet to the device A, because the device A does not support the SparkLink address, after generating the IP data packet to be sent to the device A, the device B (the first device) may determine a SparkLink address of the gateway, and use the SparkLink address as the SparkLink destination address, so that the internal network (the network constructed based on the SparkLink protocol) may route the packet to the gateway based on the SparkLink destination address. In addition, the IP address of the device B (the destination IP address) is retained in the packet, and the gateway may route the packet to the device A based on the destination IP address.

In a possible design, the first mapping relationship is predefined, the first mapping relationship is generated by the first device, or the first mapping relationship is from a second device, for example, is sent by the second device to the first device. This is not limited in this application.

During specific implementation, when the internal network (namely, the network constructed based on the second communication protocol) is initialized, the management node (the node M) that acts as a manager (Manager) is required, and an address type and address space that can be allocated are injected into the management node. The node M is responsible for address allocation of the entire internal network. Considering reliability of network management, one or more backup nodes M may further exist in the network. The address resolver (Address Resolver) node (which may be briefly referred to as the node A) is further required in the internal network, to provide a mapping query function between the non-SparkLink address (for example, the IP address) and the SparkLink network address. Two parties that communicate with each other based on non-SparkLink addresses may query SparkLink network addresses of each other from the node A, construct SparkLink data packets based on the SparkLink network addresses, and perform addressing and forwarding based on the SparkLink network addresses.

In the internal network, a plurality of nodes located in a specific range may form a communication domain. The internal network may include one or more communication domains. There may be an intersection node between different communication domains (that is, a same node may simultaneously be located in a plurality of different communication domains). Each communication domain includes one master node (or referred to as a node G) and at least one slave node (or referred to as a node T). It should be noted that a same node may play different roles in different communication domains. For example, a same node may be a node G in one communication domain and a node T in the other communication domain.

During communication, the node G may function as an address allocation server, and the node T requests the node G to allocate the SparkLink address and the IP address. In an address allocation process, the node G may create a mapping table (for example, <layer 2 identifier (Layer 2 Identifier, L2ID), SLNA address, IP address> between the SparkLink address and the IP address, to record each node (each node may be uniquely identified by using a corresponding L2ID) and an SLNA address and an IP address that correspond to the node). The node G synchronizes information in the mapping table with the node A in the network (or a node to which an address is allocated registers information about the allocated address with the node A, that is, the node A creates the mapping table of <L2ID, SLNA, IP address>). One L2ID corresponds to a plurality of SLNAs and/or a plurality of IP addresses, that is, there may be a plurality of entries.

Therefore, when the first device is the node G, the first mapping relationship may be generated by the first device. When the first node is the node A, the first mapping relationship may be generated by the first node, or sent by the node G to the first device. When the first node is the node T, the first mapping relationship may be sent by the node G or the node A to the node T. Certainly, in addition, there may be another implementation. For example, a person skilled in the art predefines the first mapping relationship, and then stores the first mapping relationship in each node in the network. This is not limited in this application.

In this way, the first device can obtain the first mapping relationship, to provide support for conversion between the first information and the second information, so that the data transmission reliability can be further improved.

In a possible design, the first data packet further includes a first QoS indication field (for example, the first information further includes the first QoS indication field). The first mapping relationship further indicates a mapping relationship between the first QoS indication field and a second QoS indication field. The second data packet further includes the second QoS indication field (for example, the second information further includes the first QoS indication field).

The first QoS indication field is a corresponding expression form of a QoS parameter in the first communication protocol. For example, when the first communication protocol is the IP protocol, the first QoS indication field may include a differentiated services code point (Differentiated Services Code Point, DSCP) or a traffic of class (Traffic of Class). The DSCP is a QoS parameter defined in an internet protocol version 4 (IPv4). The field is initially defined as a type of service (ToS) and is used to specify a differentiated service (DiffServ). The traffic of class is a QoS parameter defined in an internet protocol version 6 (IPv6) with six most significant bits in a differentiated service field (DS field) reserved for classifying data packets. Other two bits in the DS field are used for explicit congestion notification (ECN).

The second QoS indication field is a corresponding expression form of the QoS parameter in the second communication protocol. For example, when the second communication protocol is the SparkLink protocol, the second QoS indication field may include a flow label (Flow label) and a type of service (Type of Service, ToS). The flow label indicates traffic generated by an APP or traffic required by specific QoS, and is allocated by a source node, to ensure local uniqueness.

According to the foregoing design, the QoS parameter can be converted between different protocols, to ensure QoS of data in a transmission process, and further improve the data transmission reliability.

In a possible design, the first device further determines an L2ID of a next-hop node to the communication protocol destination address and a transport channel identifier (Transport Channel Identifier, TCID) of a transport channel between the first device and the next-hop node based on one or more of the communication protocol source address, the communication protocol destination address, the communication protocol source port number, the communication protocol destination port number, or the second QoS indication field, where the transport channel meets a QoS requirement corresponding to the second QoS indication field. The first device encapsulates the second data packet based on the L2ID and the TCID to generate a third data packet. The first device sends the third data packet.

It may be understood that, when sending the second data packet to a device corresponding to the communication protocol destination address, the first device needs to perform addressing based on the communication protocol source address and/or the communication protocol destination address to determine the L2ID of the next-hop node to the communication protocol destination address, to forward the second data packet to the next-hop node. If the next-hop node corresponds to the communication protocol destination address, packet forwarding is completed. If the next-hop node does not correspond to the communication protocol destination address, the next-hop node may continue to perform addressing based on the source address and/or the communication protocol destination address, and continue to search for a next node for forwarding. This process repeats until the second data packet reaches the device corresponding to the communication protocol destination address.

Optionally, when there are a plurality of next-hop nodes (or a plurality of routing paths) from the first device to the communication protocol destination address, the first device may randomly select one of the next-hop nodes to forward the packet, select, according to a principle of optimal path QoS, a next-hop node to forward the packet, or the like. This is not limited in this application.

Further, because different data packets may correspond to different QoS requirements (for example, a transmission bandwidth, a delay, and a packet loss rate), to meet different QoS requirements, a plurality of transport channels may be established between two adjacent nodes, and different transport channels may correspond to different QoS (for example, different transmission resources such as time-frequency resources are allocated). In this way, when sending a data packet, the node may bear the data packet on a transport channel that can meet a QoS requirement of the data packet. Therefore, in addition to determining the next-hop node, the first device further needs to determine the transport channel between the first device and the next-hop node.

When the transport channel is established between the nodes, the transport channel may be established based on the QoS information, the port number, the L2ID, and the like. Therefore, when sending the second data packet to the next-hop node, the first device may determine, based on the communication protocol destination port number, the second QoS indication field, and the L2ID of the next-hop node, the TCID of the transport channel that meets the QoS requirement corresponding to the second QoS indication field.

During specific implementation, the first device determines the L2ID of the next-hop node to the communication protocol destination address and the TCID of the transport channel between the first device and the next-hop node in a plurality of manners. The following lists two possible manners.

Manner 1: The first device determines the L2ID of the next-hop node to the communication protocol destination address and the TCID of the transport channel between the first device and the next-hop node based on a second mapping relationship, where the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field.

It may be understood that, in Manner 1, when there is already the transport channel that meets the QoS requirement of the second data packet in the network, the first device may determine, from the existing transport channel based on the information carried in the second data packet, the transport channel that meets the QoS requirement of the second data packet.

In this embodiment of this application, the second mapping relationship may be implemented in a plurality of manners. For example, Table 3 is a possible example of the second mapping relationship.

**Table 3**

| N o. | Communicati on protocol source addre ss | Communication protocol destina tion address | Communication protocol source port number | Communicatio n protocol des tination port n umber | Second Qo S indicatio n field | L2ID of next-hop node | TCI D |
|---|---|---|---|---|---|---|---|
| 1 | SLNA SA 1 | SLNA DA 1 | SLNA S-port 1 | SLNA D-port 2 | Flow label, ToS | L2ID 1 | TCI D 1 |

Similarly, during specific implementation, one table may store a plurality of groups of mapping relationships that correspond to different combinations of <communication protocol source address, communication protocol destination address, communication protocol source port number, communication protocol destination port number, second QoS indication field, L2ID, TCID>. The second mapping relationship is one group of mapping relationships.

After obtaining the second data packet, the first device may search Table 3 for the L2ID of the next-hop node to the communication protocol destination address and the TCID of the transport channel between the first device and the next-hop node based on the one or more of the communication protocol source address, the communication protocol destination address, the communication protocol source port number, the communication protocol destination port number, or the second QoS indication field carried in the second data packet.

It may be understood that, in actual application, the second mapping relationship may be indicated by using a plurality of tables in addition to being indicated by using one table. For example, Table 4 and Table 5 are possible examples of the second mapping relationship.

**Table 4**

| No. | Communication protocol source address | Communication protocol destination address | L2ID of a next-hop node |
|---|---|---|---|
| 1 | SLNA SA 1 | SLNA DA 1 | L2ID 1 |

It may be understood that Table 4 may be referred to as a forwarding table, and is used to search for the next-hop node. Certainly, this is merely an example herein, and there may alternatively be another name actually.

**Table 5**

| No. | Communication protocol source port number | Communication protocol destination port number | Second QoS indication field | L2ID of a next-hop node | TCID |
|---|---|---|---|---|---|
| 1 | SLNA S-port 1 | SLNA D-port 2 | Flow label, ToS | L2ID 1 | TCID 1 |

It may be understood that Table 5 may be referred to as a transport channel parsing table or a channel parsing table, and is used to search for the transport channel with the next-hop node. Certainly, this is merely an example herein, and there may alternatively be another name actually.

Similarly, Table 3 may be considered as a combination of the forwarding table and the transport channel parsing table, for example, may be referred to as a forwarding table & a transport channel parsing table. Certainly, this is merely an example herein, and there may alternatively be another name actually.

After obtaining the second data packet, the first device may search Table 4 for the L2ID of the next-hop node to the communication protocol destination address based on the communication protocol source address and/or the communication protocol destination address carried in the second data packet; and further search Table 5 for the TCID of the transport channel between the first device and the next-hop node based on the one or more of the L2ID of the next-hop node, the communication protocol source port number, the communication protocol destination port number, or the second QoS indication field.

Manner 2: The first device determines the L2ID of the next-hop node to the communication protocol destination address based on the communication protocol source address and/or the communication protocol destination address. The first device maps the second QoS indication field to a third QoS indication field, establishes the transport channel with the next-hop node based on the communication protocol destination port number, the third QoS indication field, and the L2ID of the next-hop node, and generates the TCID of the transport channel.

Different from Manner 1, in Manner 2, when there is no transport channel that meets the QoS requirement of the second data packet in the network, the first device may establish the transport channel that meets the QoS requirement of the second data packet.

For example, after obtaining the second data packet, the first device queries the existing second mapping relationship (as shown in Table 3), and finds no transport channel that meets the QoS requirement of the second data packet. In this case, the first device starts a transport channel establishment procedure, and generates the TCID of the transport channel.

For example, the second communication protocol is the SparkLink protocol, and the third QoS field may be a SparkLink quality index (SparkLink Quality Index, SLQI), or referred to as a SparkLink quality of service index, and indicates a QoS level and a corresponding QoS parameter, for example, a default priority, a delay, or a packet loss rate. Certainly, in actual application, the third QoS field may alternatively be replaced with another parameter (for example, one or more of a QoS level, a priority, a delay, and a packet loss rate), or the QoS parameter in the third QoS field may be further added. This is not limited in this application.

Optionally, after the first device establishes the transport channel, the first device may further generate the second mapping relationship based on the one or more of the communication protocol source address, the communication protocol destination address, the communication protocol source port number, the communication protocol destination port number, or the second QoS indication field, the L2ID of the next-hop node, and the TCID of the established transport channel. In this way, when subsequently transmitting a data packet having information that is the same as the second information, the first device may directly find, based on the second mapping relationship, an L2ID of a next-hop node and a TCID of a transport channel that meet a transmission requirement, to avoid repeatedly establishing the transport channel, thereby saving system resources and improving data transmission efficiency.

According to the foregoing design manner, the second data packet can be forwarded from the first device to the next-hop node, and a QoS requirement of the second data packet for a transmission path is met, thereby further improving communication reliability.

In a possible design, when the next-hop node of the first device is the device corresponding to the destination network address (that is, there is no intermediate node between the first device and the device corresponding to the destination network address, for example, in the scenario shown in FIG. 2A, the first device is the gateway, and the device corresponding to the destination network address is the device B), the one or more of the communication protocol source address, the communication protocol destination address, the communication protocol source port number, the communication protocol destination port number, the second QoS indication field, and/or the like may be omitted from the second data packet. Instead, the source network address, the destination network address, the source transport layer port number, the destination transport layer port number, the first QoS indication field, and/or the like are/is directly carried. In this way, overheads can be reduced.

In a possible design, before converting the first information corresponding to the first communication protocol into the second information corresponding to the second communication protocol, the first device may further convert information corresponding to another communication protocol, to obtain the first information. For example, if both the source network address and the destination network address in the first information are private IP addresses, the first device may further first map the public IP address to the private IP address; or if both the source network address and the destination network address in the first information are public IP addresses, the first device may first map the private IP address to the public IP address; and the like. In this way, applicability of the solution can be improved.

The foregoing describes the method provided in this embodiment of this application from a perspective of the first device. The following describes the foregoing solution from a perspective of a protocol stack of the first device.

A protocol stack of a second communication protocol is deployed on the first device provided in this embodiment of this application, and the protocol stack of the second communication protocol sequentially includes a first protocol layer, a second protocol layer, a third protocol layer, and a fourth protocol layer from top to bottom.

Several applications (Application, APP)/service instances may be deployed at the first protocol layer, and may be used to provide a service for an application (also referred to as an application or a user).

The second protocol layer is used to provide an information conversion function between different transmission protocols (for example, store a first mapping relationship and a second mapping relationship).

The third protocol layer is used to establish a transport channel between nodes, and provide an end-to-end information transmission service.

The fourth protocol layer may provide a communication interface/means for communication between the nodes. An access layer may include a plurality of different access technologies, and different access technologies may correspond to different communication interfaces such as a cellular interface, a Wi-Fi interface, and a SparkLink interface.

It should be understood that the protocol layers are merely framework structure division. Different communication systems may have respective layer division manners, or may have more specific and lower-level layer division. This is not specifically limited herein.

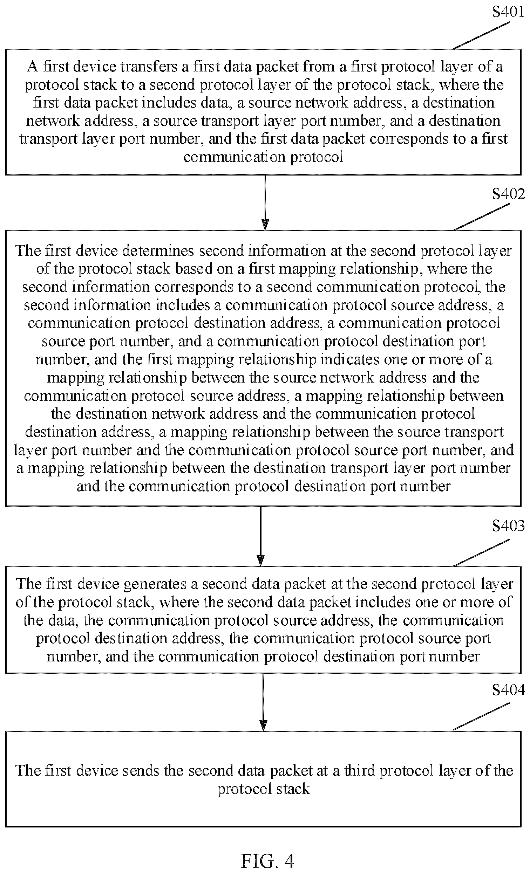

FIG. 4 is a flowchart of another data transmission method according to an embodiment of this application. The method may be applied to a first device, and a protocol stack of a second communication protocol is deployed on the first device. The method includes the following steps.

S401: The first device transfers a first data packet from a first protocol layer of the protocol stack to a second protocol layer of the protocol stack, where the first data packet includes data, a source network address, a destination network address, a source transport layer port number, and a destination transport layer port number, and the first data packet corresponds to a first communication protocol.

S402: The first device determines second information at the second protocol layer of the protocol stack based on a first mapping relationship, where the second information corresponds to the second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number.

S403: The first device generates a second data packet at the second protocol layer of the protocol stack, where the second data packet includes one or more of the data, the communication protocol source address, the communication protocol destination address, the communication protocol source port number, and the communication protocol destination port number.

S404: The first device sends the second data packet at a third protocol layer of the protocol stack.

It may be understood that the second data packet may alternatively be actually processed by a fourth protocol layer, and sent through a communication interface provided by the fourth protocol layer.

Further, if the first information further carries a QoS parameter of the first protocol layer, for example, the first QoS indication field described above, the first device further converts the first QoS indication field into a QoS parameter of the second protocol layer at the second protocol layer of the protocol stack, for example, the second QoS field described above, and the second data packet further includes the second QoS indication field (for example, the second information further includes the first QoS indication field).

Further, the first device may further determine an L2ID of a next-hop node to the communication protocol destination address and a transport channel identifier TCID of a transport channel between the first device and the next-hop node at the second protocol layer of the protocol stack based on one or more of the communication protocol source address, the communication protocol destination address, the communication protocol source port number, the communication protocol destination port number, or the second QoS indication field, where the transport channel meets a QoS requirement corresponding to the second QoS indication field. Correspondingly, that the first device sends the second data packet at a third protocol layer of the protocol stack includes: The first device encapsulates the second data packet at the third protocol layer of the protocol stack based on the L2ID and the TCID (for example, adds the L2ID and the TCID to a header of the second data packet) to generate the third data packet. Further, the first device sends the third data packet at the third protocol layer of the protocol stack.

Similarly, corresponding to Manner 1, when there is already the transport channel that meets the QoS requirement of the second data packet in the network, the second protocol layer stores a second mapping relationship, and the first device may determine the L2ID of the next-hop node to the communication protocol destination address and the TCID of the transport channel between the first device and the next-hop node at the second protocol layer of the protocol stack based on the second mapping relationship.

Similarly, corresponding to Manner 2, when there is no transport channel that meets the QoS requirement of the second data packet in the network, the first device may determine the L2ID of the next-hop node to the communication protocol destination address at the second protocol layer of the protocol stack based on the communication protocol source address and/or the communication protocol destination address. Then, the first device maps the second QoS indication field to a third QoS indication field (for example, an SLQI) at the third protocol layer of the protocol stack, establishes the transport channel with the next-hop node based on the communication protocol destination port number, the third QoS indication field, and the L2ID of the next-hop node, and generates the TCID of the transport channel. Further, the first device may encapsulate the second data packet at the third protocol layer of the protocol stack based on the L2ID and the TCID.

Further, the third protocol layer may further feed back the TCID for generating the transport channel to the second protocol layer. Further, the first device may generate the second mapping relationship at the second protocol layer of the protocol stack based on the one or more of the communication protocol source address, the communication protocol destination address, the communication protocol source port number, the communication protocol destination port number, or the second QoS indication field, the L2ID of the next-hop node, and the TCID of the transport channel for use in data packet transmission next time.

For ease of understanding, the following describes the foregoing solution in more detail by using an example in which the second communication protocol is a SparkLink protocol.

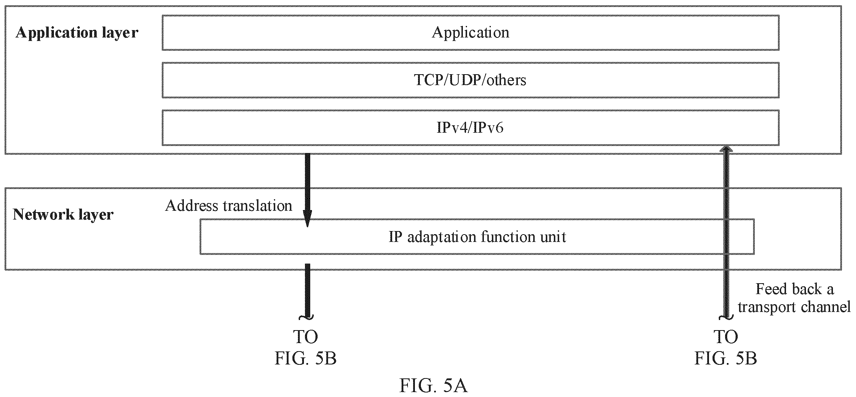

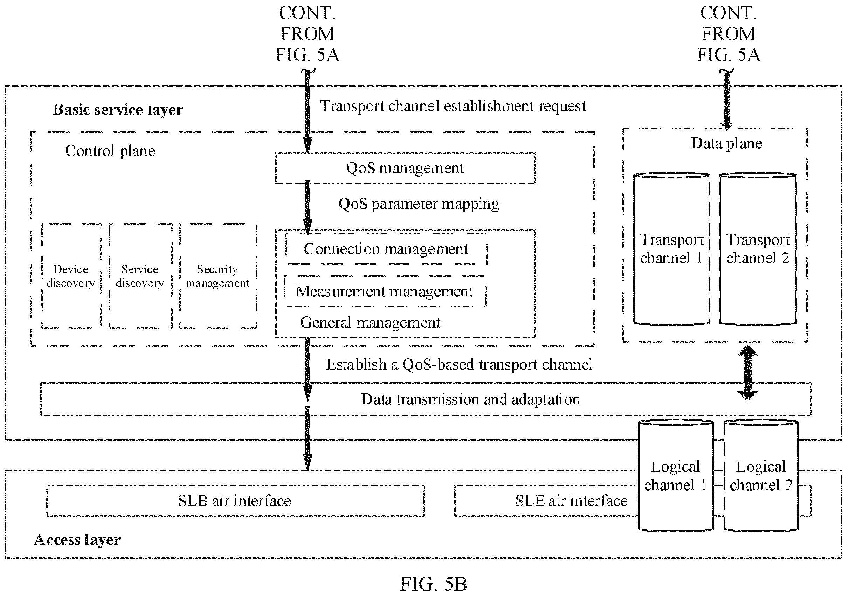

FIG. 5A and FIG. 5B are a diagram of a protocol stack of a SparkLink protocol according to an embodiment of this application. The following layers are included from top to bottom.
1. An application layer (corresponding to a first protocol layer) is located above a network layer. Several APPs/service instances may be deployed at the application layer, and may be used to provide a service for an application (also referred to as an application or a user). Optionally, the application layer may be further used to provide support for protocols such as TCP/UDP and IPv4/IPv6.
2. The network layer (corresponding to a second protocol layer) is located above a basic service layer, and is used to provide an information conversion function between different transmission protocols (for example, conversion between first information corresponding to a first communication protocol and second information corresponding to a second communication protocol). For example, an IP adaptation function unit may be provided. The IP adaptation function unit is a logical function entity, and is configured to convert related information (for example, IP address information) of an IP protocol and related information (for example, a SparkLink address) of the SparkLink protocol. Specifically, the information conversion function between different transmission protocols may be provided by maintaining a first mapping relationship and a second mapping relationship.
3. The basic service layer (corresponding to a third protocol layer) is located above an access layer, and is used to establish a transport channel between nodes, and provide an end-to-end information transmission service.

For example, the basic service layer may provide control plane function units such as a QoS management function unit, a connection management unit, a device discovery function unit, a service discovery function unit, a security management function unit, and a measurement management function unit.
(1) The QoS management function unit is a logical function entity, and is used to determine service quality that needs to be provided by a SparkLink wireless communication system based on factors such as a service transmission requirement and a network status, to ensure that a transmission capability of the SparkLink wireless communication system matches the service requirement.
   For example, the QoS management function unit may be responsible for negotiating and determining a QoS parameter. When service data needs to be transmitted at an application layer of a transmit end, information like a service type, a SparkLink port number, and a service-associated QoS parameter (a flow label and a ToS) is delivered to the QoS management function unit, and the QoS management function unit at the transmit end negotiates, based on the received parameter, with a peer QoS management function unit about a QoS parameter required for transmission, to determine an SLQI.
(2) The connection management function unit is a logical function entity that supports functions such as establishment, update, and deletion of a transport channel, maintenance of a mapping relationship between a service port and a transport channel, and maintenance of a mapping relationship between a transport channel and an access layer logical channel. For example, the connection management function unit may start establishment or update of a transport channel based on a QoS parameter negotiated by the QoS management function unit, and feed back information (for example, a TCID) about the established or updated transport channel to the network layer (for example, the IP adaptation function unit) for storage and maintenance.
(3) The device discovery function unit is a logical function entity, and is used to expose existence of the device or discover a peripheral device.
(4) The service management function unit is a logical function entity, and is used for service management and maintenance inside a device and service discovery between devices.
(5) The measurement management function unit supports triggering of measurement of physical layer signal quality at the access layer and performance of an existing transport channel, provides a unified measurement service interface for another function unit (for example, the QoS management function unit and a 5G convergence function unit) inside a device or an authorized application, and allows a corresponding function unit to provide, for the measurement management function unit, configuration information that is expected to be measured and query a measurement result.

It may be understood that the several control plane function units are merely examples rather than limitations, and there may be other function units actually.

**In** addition to providing the related control plane functions, the basic service layer may further provide a function of a data plane (or referred to as a user plane). For example, a data packet is mapped to a corresponding transport channel for transmission by querying the first mapping relationship and the second mapping relationship that are maintained by IP adaptation function unit at the network layer.

4. The access layer (corresponding to a fourth protocol layer) may provide a communication interface/means for communication between the nodes. The access layer may include a plurality of different access technologies, and different access technologies may correspond to different communication interfaces such as an SLB air interface and an SLE air interface.

It should be understood that the protocol layers are merely framework structure division. Different communication systems may have respective layer division manners, or may have more specific and lower-level layer division. This is not specifically limited herein. For example, the functional module of the network layer may alternatively be integrated into the basic service layer, so that the network layer is omitted (that is, the application layer is above the basic service layer). In addition, a name of each protocol layer is merely an example, and may alternatively be another name in actual application. A protocol layer may be considered as a protocol layer in this embodiment of this application provided that a function of the protocol layer is the same as or similar to a function of the protocol layer in this embodiment of this application.

**In** this embodiment of this application, different protocol layers maintain different transport parameters. Parameters in the first mapping relationship and the second mapping relationship may be specifically stored and maintained at the network layer.

The following uses tables as examples to describe the parameters maintained at the protocol layers.
1. Entries maintained at the application layer (for an application instance):

**Table 6**

| No. | APP source address | APP destination address | APP source port number | APP destination port number | QoS parameter at an application layer | | AID |
|---|---|---|---|---|---|---|---|
| | | | | | DSCP | Service feature | |
| 1 | IP SA 1 | IP DA 1 | IP S-Port 1 | IP D-port 2 | DSCP 2 | Bandwidth/Delay | Video screen projection |

The AID is an application identifier (Application Identifier). In the entry, an example in which the AID is the video screen projection is used. This is not limited actually.
2. Entries (the first mapping relationship and the second mapping relationship) maintained at the network layer (the IP adaptation management unit):

**Table 7**

| No. | SparkLink source address & SparkLink source port | SparkLink destination address & SparkLink destination port | Target L2ID | Upper-layer protocol identifier | QoS parameter at a network layer | | Application data indication parameter (provided by an application layer) | Transport channel information (provided by a basic service layer) | |
|---|---|---|---|---|---|---|---|---|---|
| | | | | | Flow Label | ToS | IP quintuplets+ AID | Transport mode & TCID | Transport parameter |
| 1 | SLNA SA 1 & SLNA S-Port 1 | SLNA DA 1 & SLNA D-Port 2 | L2ID 1 | PI 1 | FL 1 | ToS 1 | <IP SA 1, IP DA 1, IP S-port 1, IP D-port 2, DSCP 1>+AID | TCID 1 | MTU 1/MPS 1 |

The maximum transmission unit (Maximum Transmission Unit, MTU) is a maximum transmission unit for data transmission at the basic service layer. A maximum size of a buffer (Buffer) at the current layer needs to be considered for a size of the MTU. A size of a data packet at the application layer cannot exceed the size of the MTU.

The maximum payload size (Maximum Payload Size, MPS) is a maximum transmission unit that can be transmitted at the access layer. The basic service layer needs to divide an SUD into a plurality of PDUs, and a size of each PDU cannot exceed the MPS.

The upper-layer protocol identifier (Protocol Identifier, PI) indicates a protocol type.

3. Entries maintained at the basic service layer (for a transport channel):

**Table 8**

| No. | TCID | SL-Port (Spark Link port) | Transp ort mode | QoS parameter at a basic service layer | | Service flow parameter (provided by a network layer) | | | | Logical channel information (provided by an access layer) | |
|---|---|---|---|---|---|---|---|---|---|---|---|
| | | | | SLQI | Transport parameter | SparkLink source address | SparkLink destination address | Flow Label | ToS | LCID | XQI |
| 1 | TCID 1 | 1 | Flow mode | SLQI 1 | MTU/MPS | SLNA SA 1 | SLNA DA 1 | FL 1 | ToS 1 | LCID 2 | XQI 1 |

4. Entries maintained at the access layer (for a logical channel):

**Table 9**

| No. | LCID | QoS parameter at an access layer | | TCID (provided by a basic service layer) |
|---|---|---|---|---|
| | | XQI | AID | |
| 1 | LCID 2 | XQI 1 | Video screen projection | TCID 1 |
| 2 | ... | ... | ... | ... |

The XQI is the transaction quality index (Transaction Quality Index, XQI), and the LCID is the logical channel identifier (Logical Channel Identifier, LCID).

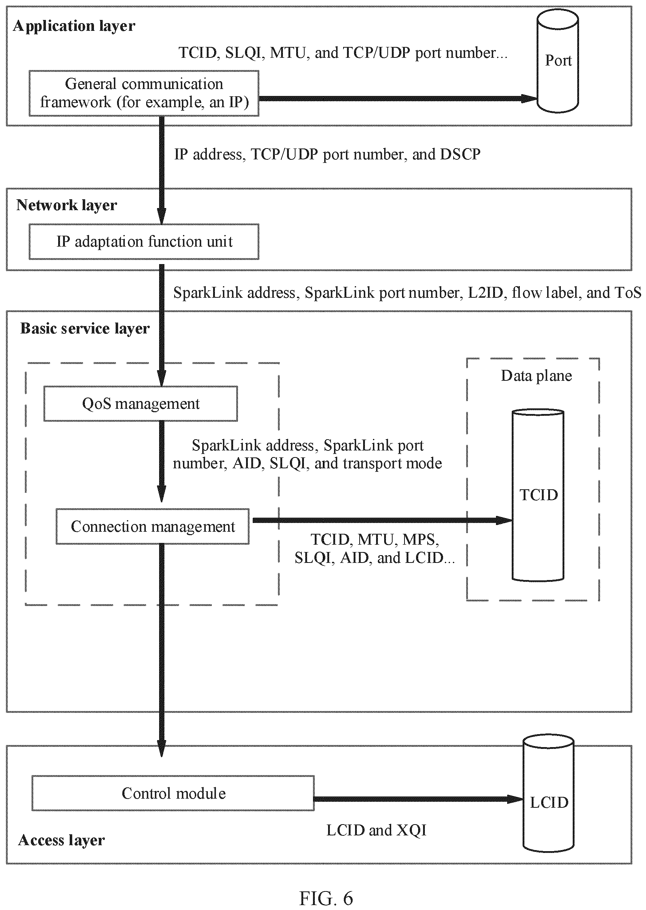

FIG. 6 is a diagram of a relationship between related function units in a SparkLink protocol stack.

IP adaptation function unit: After obtaining an IP data packet (namely, a first data packet), a first device may search, based on parameters such as an IP address (including a source IP address and a destination IP address), a TCP/UDP port number (including a source TCP/UDP port number and a destination TCP/UDP port number), and a DSCP that are carried in the IP data packet, a table by using the IP adaptation function unit at a network layer, to translate the IP address to a SparkLink address, translate the TCP/UDP port number to a SparkLink port number, and convert the DSCP into a flow label and a ToS.

QoS management unit: is responsible for negotiating and determining a QoS parameter. When service data needs to be transmitted at an application layer of the first device, information like a service type, a SparkLink port number, and a service-associated QoS parameter (for example, a flow label and a ToS) is delivered to a QoS management function unit, and the QoS management function unit negotiates, based on the received parameter, with a peer (for example, a next-hop node) QoS management function unit about a QoS parameter required for transmission, to determine an SLQI. In other words, QoS parameter mapping is applied: <source SLNA, destination SLNA, SparkLink domain port number, Flow label, ToS, AID> → <source SLNA, destination SLNA, SparkLink port number, SLQI, AID>.

Connection management unit: starts establishment or update of a transport channel based on a QoS parameter negotiated by the QoS management unit, establishes a transport channel that meets a QoS requirement, and feeds back a TCID of the established transport channel to the IP adaptation function unit for storage and maintenance.

After receiving the TCID fed back by the connection management unit, the IP adaptation function unit updates an entry maintained by the network layer (IP adaptation management unit), so that after subsequently receiving an IP data packet, the first device may directly search the table locally and forward the data packet, to bear the data packet.

According to the foregoing solution, conversion between the IP parameter and the SparkLink parameter can be implemented in the SparkLink protocol stack, so that the IP data packet can be borne in the SparkLink domain, and data transmission reliability can be improved.

To understand the technical solutions provided in embodiments of this application more clearly, the following further describe a data packet forwarding process by using examples with reference to the single-hop scenario shown in FIG. 2A and the multi-hop scenario shown in FIG. 2B.

### Example 1: single-hop scenario

End devices (for example, a device A and a device B) both support dual protocol addresses (for example, an IP address and a SparkLink address).

Initial condition: The device B applies for a SparkLink network address SLNA after accessing a SparkLink network.

For example, after a node T in the SparkLink network is started, the node T and a node G discover each other and establish a management connection, which needs to meet a requirement like secure access. The device B may be the node G or the node T. This is not limited. The node G has an IP capability and functions as an address allocation server. The node T needs to request the node G to allocate the SLNA address. In an address allocation process, the node G may create a mapping table of <L2ID, SLNA>. One L2ID may have a plurality of SLNAs, namely, a plurality of entries. In addition, the node G supports a mutual query service between the L2ID and the SLNA address. Any node T may query address information from an address service of the node G.

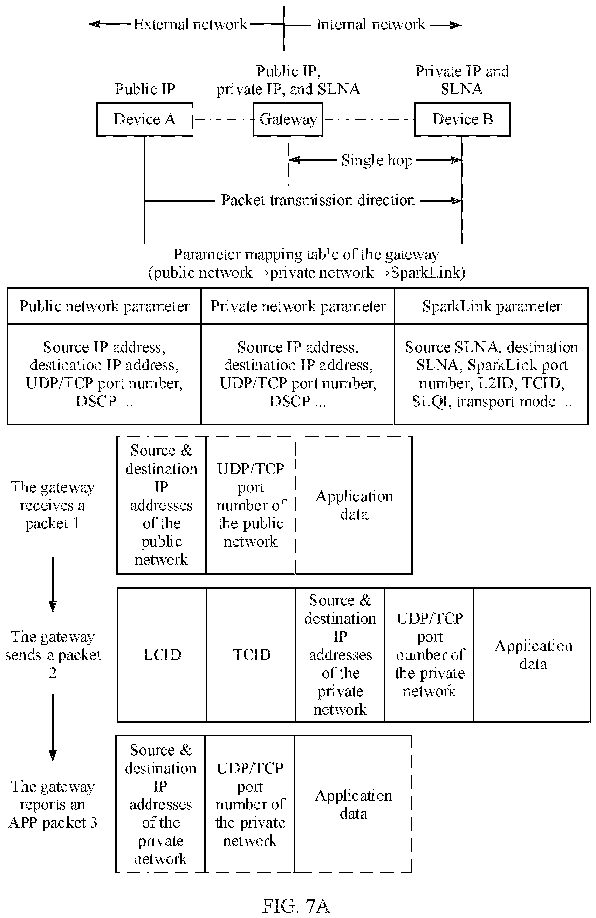

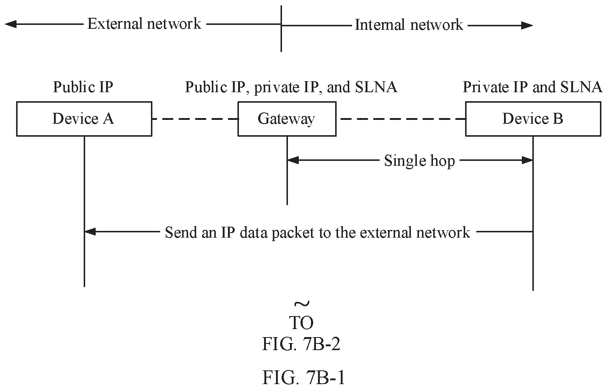

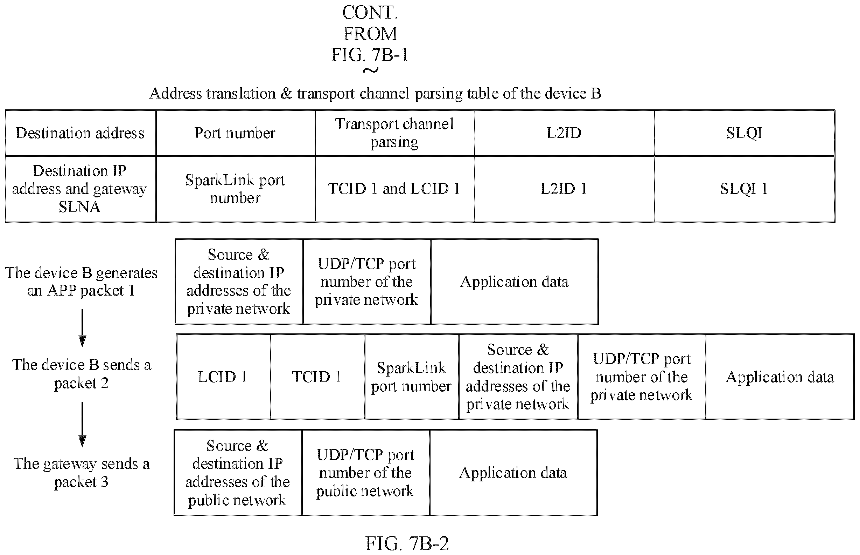

FIG. 7A is a diagram in which an internal network device receives an IP data packet sent by an external network device. In this example, a gateway and devices (for example, the device B) in a SparkLink domain need to meet the following requirements:

### 1. Gateway:

The external network device (the device A) → the gateway: The device A sends a public IP data packet (namely, a packet 1 shown in FIG. 7A) to the gateway.

The gateway translates public IP address information (for example, a public IP address and a public TCP/UDP port number) to SparkLink address information (for example, an SLNA and a SparkLink port number). Specifically, the gateway may first translate the public IP address information to private IP address information (for example, a private IP address and a private TCP/UDP port number), and then map the private IP address information to the SparkLink address information. The gateway imports SLNA traffic to a SparkLink protocol stack.

The gateway parses information like <IP address, TCP/UDP port number, DSCP> in the IP data packet, and queries a transport channel parsing table based on the information. If a corresponding entry exists, the gateway encapsulates the packet, and generates and sends a SparkLink data packet (a packet 2 shown in FIG. 7A). If the corresponding entry does not exist, the gateway initiates QoS negotiation and transport channel establishment, and generates the corresponding entry. Then, the gateway encapsulates the packet based on a newly established transport channel, and generates and sends the SparkLink data packet. If the transport channel fails to be established, the gateway discards the packet.

It may be understood that, because this is the single-hop scenario, the SparkLink address may be omitted from a header of the packet 2 (the header of the packet 2 shown in FIG. 7A). In actual application, the SparkLink address may alternatively be encapsulated in the packet 2.

### 2. Device B:

The device B cooperates with the node G to perform QoS negotiation and transport channel establishment, and generates the entry of the related transport channel parsing table; and receives the SparkLink data packet, and sends the IP data packet (a packet 3 shown in FIG. 7A) to an IP protocol stack/IP application based on the SparkLink port number.

FIG. 7B-1 and FIG. 7B-2 are a diagram in which the internal network device sends an IP data packet to the external network device. In this example, the gateway and the devices (for example, the device B) in the SparkLink domain need to meet the following requirements:

### 1. Device B:

An application layer generates a private IP data packet (namely, a packet 1 shown in FIG. 7B-1 and FIG. 7B-2), and transfers the private IP data packet to the SparkLink protocol stack. The SparkLink protocol stack obtains information like <IP address, TCP/UDP port number, DSCP> from a primitive sending interface and a private IP data packet header, and queries a transport channel parsing table. If a corresponding entry exists, the device B encapsulates the IP data packet into a SparkLink packet header, generates a SparkLink data packet (namely, a packet shown in FIG. 7B-1 and FIG. 7B-2), and sends the SparkLink data packet. If the corresponding entry does not exist, the device B needs to establish a transport connection or reuse an existing transport connection based on the information like <IP address, TCP/UDP port number, DSCP>. If the transport connection is successfully established, the device B encapsulates the IP data packet into the SparkLink packet header based on the corresponding entry and sends the SparkLink data packet. If the transport connection fails to be established, the device B discards the packet.

### 2. Gateway:

The gateway receives the SparkLink data packet and sends the SparkLink data packet to the IP protocol stack.

The gateway translates SparkLink address information to public IP address information, and sends the IP data packet (namely, a packet 3 shown in FIG. 7B-1 and FIG. 7B-2) to an external network.

It may be understood that, because this is the single-hop scenario, the SparkLink address may be omitted from a header of the packet 2 (the header of the packet 2 shown in FIG. 7B-1 and FIG. 7B-2 does not exist). In actual application, the SparkLink address may alternatively be encapsulated in the packet 2.

According to Example 1, end-to-end transmission between application data of the public IP and the end device in the SparkLink domain can be implemented, so that the IP data can be borne in the SparkLink domain. In the SparkLink domain, the SparkLink address information is used for routing and addressing and packet forwarding. A short length and flexible customization of the SparkLink address can be fully utilized to reduce packet header overheads, improve a payload ratio, and improve transmission efficiency.

### Example 2: multi-hop scenario

End devices (for example, a device A and a device B) both support dual protocol addresses (for example, an IP address and a SparkLink address).

Initial condition: The device B applies for a SparkLink network address SLNA after accessing a SparkLink network.

For example, after a node T in the SparkLink network is started, the node T and a node G discover each other and establish a management connection, which needs to meet a requirement like secure access. The device B may be the node G or the node T. This is not limited. The node G has an IP capability and functions as an address allocation server. The node T needs to request the node G to allocate the SLNA address. In an address allocation process, the node G may create a mapping table of <L2ID, SLNA>. One L2ID may have a plurality of SLNAs, namely, a plurality of entries. In addition, the node G supports a mutual query service between the L2ID and the SLNA address. Any node T may query address information from an address service of the node G.

FIG. 8A-1 to FIG. 8A-3 are a diagram in which an internal network device receives an IP data packet sent by an external network device. In this example, a gateway and devices (for example, the device B) in a SparkLink domain need to meet the following requirements:

### 1. Gateway:

The external network device (the device A) → the gateway: The device A sends a public IP data packet (namely, a packet 1 shown in FIG. 8A-1 to FIG. 8A-3) to the gateway.

The gateway translates public IP address information (for example, a public IP address and a public TCP/UDP port number) to SparkLink address information (for example, an SLNA and a SparkLink port number). Specifically, the gateway may first translate the public IP address information to private IP address information (for example, a private IP address and a private TCP/UDP port number), and then map the private IP address information to the SparkLink address information. The gateway imports SLNA traffic to a SparkLink protocol stack.

The gateway parses information like <IP address, TCP/UDP port number, DSCP> in the IP data packet, and queries a forwarding table, a transport channel parsing table, and the like based on the information. If a corresponding entry exists, the gateway encapsulates the packet, and generates and sends a SparkLink data packet (a packet 2 shown in FIG. 8A-1 to FIG. 8A-3). If the corresponding entry does not exist, the gateway initiates QoS negotiation and transport channel establishment, and generates the corresponding entry. Then, the gateway encapsulates the packet based on a newly established transport channel, and generates and sends the SparkLink data packet. If the transport channel fails to be established, the gateway discards the packet.

### 2. Intermediate nodes 1 and 2:

After receiving the SparkLink data packet from the device A, the intermediate nodes 1 and 2 perform necessary encapsulation on the SparkLink data packet (for example, adding an LCID and a TCID, which depends on a requirement of a frame format), for example, search for and replace with an LCID and a TCID of a next-hop node level by level, and finally, forward the packet to the device B.

### 3. Device B:

The device B cooperates with the node G to perform QoS negotiation and transport channel establishment, and generates the related entry; and receives the SparkLink data packet (a packet 4 shown in FIG. 8A-1 to FIG. 8A-3), and sends the IP data packet (a packet 5 shown in FIG. 8A-1 to FIG. 8A-3) to an IP protocol stack/IP application based on the SparkLink port number.

FIG. 8B-1 to FIG. 8B-3 are a diagram in which the internal network device receives an external IP data packet. In this example, the gateway and the devices (for example, the device B) in the SparkLink domain need to meet the following requirements:

### 1. Device B:

An application layer generates a private IP data packet (namely, a packet 1 shown in FIG. 8B-1 to FIG. 8B-3), and transfers the private IP data packet to the SparkLink protocol stack. The SparkLink protocol stack obtains information like <IP address, TCP/UDP port number, DSCP> from a primitive sending interface and a private IP data packet header, and queries a forwarding table, a transport channel parsing table, and the like. If an entry exists, the device B encapsulates the IP data packet into a SparkLink packet header, generates a SparkLink data packet (namely, a packet 2 shown in FIG. 8B-1 to FIG. 8B-3), and sends the SparkLink data packet. If the entry does not exist, the device B needs to establish a transport connection or reuse an existing transport connection based on the information like <IP address, TCP/UDP port number, DSCP>. If the transport connection is successfully established, the device B encapsulates the IP data packet into the SparkLink packet header based on the corresponding entry and sends the SparkLink data packet. If the transport connection fails to be established, the device B discards the packet.

### 2. Intermediate nodes 1 and 2:

After receiving the SparkLink data packet from the device B, the intermediate nodes 1 and 2 perform necessary encapsulation on the SparkLink data packet (for example, adding an LCID and a TCID, which depends on a requirement of a frame format), for example, search for and replace with an LCID and a TCID of a next-hop node level by level, and finally, forward the packet to the gateway.

### 3. Gateway:

After receiving the SparkLink data packet (a packet 4 shown in FIG. 8B-1 to FIG. 8B-3), the gateway translates SparkLink address information to public IP address information, and sends the IP data packet (namely, a packet 5 shown in FIG. 8B-1 to FIG. 8B-3) to an external network.

According to Example 2, end-to-end transmission between application data of the public IP and the end device in the SparkLink domain can be implemented, so that the IP data can be borne in the SparkLink domain. In the SparkLink domain, the SparkLink address information is used for routing and addressing and packet forwarding. A short length and flexible customization of the SparkLink address can be fully utilized to reduce packet header overheads, improve a payload ratio, and improve transmission efficiency.

It should be noted that, in the foregoing embodiments, an example in which the transport channel is determined based on the address and the port number corresponding to the second communication protocol is mainly used (for example, the transport channel is associated with the SparkLink address, the SparkLink port number, and the like). In actual application, the solution in which the first device determines the transport channel may alternatively be applied to another communication protocol (for example, the transport channel may alternatively be associated with the IP address, the TCP/UDP port number, and the like).

For example, FIG. 9 is a flowchart of another data transmission method according to an embodiment of this application. The method includes:
S901: A first device obtains a data packet, where the data packet includes data, a source address, a destination address, a source port number, a destination port number, and a QoS indication field.

For a specific implementation, refer to S301 or S401. Details are not described herein again. A difference lies only in that communication protocols corresponding to the source address, the destination address, the source port number, the destination port number, the QoS indication field, and the like are not limited herein.

For example, corresponding to an IP protocol, types of the source address and the destination address are IP addresses, types of the source port number and the destination port number are TCP/UDP port numbers, and the QoS parameter is a DSCP or a traffic of class.

For example, corresponding to a SparkLink protocol, the types of the source address and the destination address are SparkLink addresses, the types of the source port number and the destination port number are SparkLink port numbers, and the QoS parameter is a ToS.

S902: The first device determines a layer 2 identifier L2ID of a next-hop node to the destination address and a TCID of a transport channel between the first device and the next-hop node based on one or more of the source address, the destination address, the source port number, the destination port number, or the QoS indication field, where the transport channel meets a QoS requirement corresponding to the QoS indication field.

Similarly, when there is already the transport channel that meets the QoS requirement of the data packet in the network, the first device may determine the L2ID of the next-hop node to the destination address and the TCID of the transport channel between the first device and the next-hop node based on a second mapping relationship, where the second mapping relationship indicates a mapping relationship between the L2ID of the next-hop node and the TCID of the transport channel, and the one or more of the source address, the destination address, the source port number, the destination port number, or the QoS indication field.

When there is no transport channel that meets the QoS requirement of the second data packet in the network, the first device may determine the L2ID of the next-hop node to the destination address based on the source address and/or the destination address. The first device establishes the transport channel with the next-hop node based on the destination port number, the QoS indication field, and the L2ID of the next-hop node, and generates the TCID of the transport channel. Further, the first device may further generate the second mapping relationship based on the one or more of the source address, the destination address, the source port number, the destination port number, or the QoS indication field, the L2ID of the next-hop node, and the TCID of the transport channel, for use in subsequent data packet forwarding.

S903: The first device encapsulates the data packet based on the L2ID and the TCID, and sends the encapsulated data packet.

For a specific implementation, refer to S404. Details are not described herein again.

Similarly, when the types of the source address and the destination address are the IP addresses, if the destination address is an address of a next-hop node, the SparkLink address may be omitted from the encapsulated data packet. For example, the encapsulated data packet includes the L2ID, the TCID, the source address, and the destination address. Alternatively, if the destination address is not the address of the next-hop node, both the IP address and the SparkLink address may be encapsulated in the data packet, for example, the encapsulated data packet includes the L2ID, the TCID, the source address, the destination address, the SparkLink address corresponding to the source address, and the SparkLink address corresponding to the destination address.

According to the foregoing solution, a QoS requirement of the data packet for a transmission path is met, thereby improving communication reliability.

It should be understood that embodiments provided in this specification may be separately implemented, or may be implemented in combination with each other. This is not limited in this application.

The methods provided in embodiments of this application are described above with reference to the accompanying drawings. The following describes apparatuses provided in embodiments of this application with reference to the accompanying drawings.

Based on a same technical concept, an embodiment of this application provides a data transmission apparatus. The apparatus includes modules/units/means configured to perform the method shown in FIG. 3 or FIG. 9. The module/unit/means may be implemented by software, may be implemented by hardware, or may be implemented by hardware executing corresponding software.

For example, refer to FIG. 10. The apparatus may include an obtaining unit 1001, a processing unit 1002, and a sending unit 1003.

When the apparatus is configured to perform the method shown in FIG. 3, the obtaining unit 1001 is configured to obtain a first data packet, where the first data packet includes data and first information, the first information includes a source network address, a destination network address, a source transport layer port number, and a destination transport layer port number, and the first information corresponds to a first communication protocol; the processing unit 1002 is configured to: determine second information based on a first mapping relationship, where the second information corresponds to a second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number, and generate a second data packet, where the second data packet includes one or more of the data, the communication protocol source address, the communication protocol destination address, the communication protocol source port number, and the communication protocol destination port number; and the sending unit 1003 is configured to send the second data packet.

When the apparatus is configured to perform the method shown in FIG. 9, the obtaining unit 1001 is configured to obtain a data packet, where the data packet includes data, a source address, a destination address, a source port number, a destination port number, and a QoS indication field; the processing unit 1002 is configured to: determine a layer 2 identifier L2ID of a next-hop node to the destination address and a TCID of a transport channel between the apparatus and the next-hop node based on one or more of the source address, the destination address, the source port number, the destination port number, or the QoS indication field, where the transport channel meets a QoS requirement corresponding to the QoS indication field, and encapsulate the data packet based on the L2ID and the TCID; and the sending unit 1003 is configured to send the encapsulated data packet.

Based on a same technical concept, an embodiment of this application provides a data transmission apparatus. The apparatus includes modules/units/means configured to perform the method shown in FIG. 4. The module/unit/means may be implemented by software, may be implemented by hardware, or may be implemented by hardware executing corresponding software.

For example, refer to FIG. 11. The apparatus may include:
a first protocol layer module 1101, configured to transfer a first data packet to a second protocol layer module, where the first data packet includes data and first information, the first information includes a source network address, a destination network address, a source transport layer port number, and a destination transport layer port number, and the first information corresponds to a first communication protocol;
the second protocol layer module 1102, configured to: determine second information based on a first mapping relationship, where the second information corresponds to a second communication protocol, the second information includes a communication protocol source address, a communication protocol destination address, a communication protocol source port number, and a communication protocol destination port number, and the first mapping relationship indicates one or more of a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number; and generate a second data packet, where the second data packet includes one or more of the data, the communication protocol source address, the communication protocol destination address, the communication protocol source port number, and the communication protocol destination port number; and
a third protocol layer module 1103, configured to send the second data packet.

It should be understood that all related content of the steps in the foregoing method embodiments may be cited in function descriptions of corresponding functional modules. Details are not described herein again.

Refer to FIG. 12. An embodiment of this application further provides a data transmission apparatus. The apparatus includes at least one processor 1201 and an interface circuit 1202. The interface circuit 1202 is configured to: receive a signal from an apparatus other than the apparatus and send the signal to the processor 1201, or send a signal from the processor 1201 to a communication apparatus other than the apparatus, and the processor 1201 is configured to implement, by using a logic circuit or by executing code instructions, the method performed by the first device.

It should be understood that the processor mentioned in this embodiment of this application may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory.

For example, the processor may be a central processing unit (Central Processing unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, a discrete gate or transistor logic device, a discrete hardware component, or the like. The general-purpose processor may be a microprocessor, or the processor may be any conventional processor, or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through an example but not a limitative description, RAMs in many forms are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification intends to include, but is not limited to, these memories and any other memory of an appropriate type.

Based on a same technical concept, an embodiment of this application further provides a computer-readable storage medium, including a program or instructions. When the program or the instructions are run on a computer, the method performed by the first device is performed.

Based on a same technical concept, an embodiment of this application further provides a computer program product including instructions. The computer program product stores the instructions, and when the instructions are run on a computer, the method performed by the first device is performed.

Based on a same technical concept, an embodiment of this application further provides a terminal device, which is the first device described above or includes the first device described above. The terminal device may be a vehicle, a drone, a helicopter, an airplane, a ship, a smart transportation device, a smart home device, or the like. A specific form of the terminal device is not limited in embodiments of this application.

In this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. In text descriptions of this application, a character "/" indicates an "or" relationship between the associated objects. In a formula in this application, a character "/" indicates a "division" relationship between the associated objects. "Including at least one of A, B, and C" may indicate: including A; including B; including C; including A and B; including A and C; including B and C; and including A, B, and C.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A data transmission method, comprising:
obtaining, by a first device, a first data packet, wherein the first data packet comprises data and first information, the first information comprises a source network address, a destination network address, a source transport layer port number, and a destination transport layer port number, and the first information corresponds to a first communication protocol;
determining, by the first device, second information based on a first mapping relationship, wherein the second information corresponds to a second communication protocol, the second information comprises a communication protocol source address, a communication protocol destination address, a communication protocol source port number, and a communication protocol destination port number, and the first mapping relationship indicates a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number;
generating, by the first device, a second data packet, wherein the second data packet comprises the data, the communication protocol source address, the communication protocol destination address, the communication protocol source port number, and the communication protocol destination port number; and
sending, by the first device, the second data packet.

2. The method according to claim 1, wherein
the first mapping relationship is predefined; or
the first mapping relationship is generated by the first device; or
the first mapping relationship is from a second device.

3. The method according to claim 1 or 2, wherein the first data packet further comprises a first quality of service QoS indication field, and the first QoS indication field comprises a differentiated services code point DSCP or a traffic of class Traffic of Class;
the first mapping relationship further indicates a mapping relationship between the first QoS indication field and a second QoS indication field, and the second QoS indication field comprises a flow label Flow Label and a type of service ToS; and
the second data packet further comprises the second QoS indication field.

4. The method according to claim 3, wherein the sending, by the first device, the second data packet comprises:
determining, by the first device, a layer 2 identifier L2ID of a next-hop node corresponding to the communication protocol destination address and a transport channel identifier TCID of a transport channel between the first device and the next-hop node based on one or more of the communication protocol source address, the communication protocol destination address, the communication protocol source port number, the communication protocol destination port number, or the second QoS indication field, wherein the transport channel meets a QoS requirement corresponding to the second QoS indication field; and
encapsulating, by the first device, the second data packet based on the L2ID and the TCID to generate a third data packet, and sending, by the first device, the third data packet.

5. The method according to claim 4, wherein the determining, by the first device, an L2ID of a next-hop node to the communication protocol destination address and a TCID of a transport channel between the first device and the next-hop node based on one or more of the communication protocol source address, the communication protocol destination address, the communication protocol source port number, the communication protocol destination port number, or the second QoS indication field comprises:
determining, by the first device, the L2ID of the next-hop node to the communication protocol destination address and the TCID of the transport channel between the first device and the next-hop node based on a second mapping relationship, wherein the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field; or
determining, by the first device, the L2ID of the next-hop node to the communication protocol destination address based on the communication protocol source address and/or the communication protocol destination address; and mapping, by the first device, the second QoS indication field to a third QoS indication field, establishing the transport channel with the next-hop node based on the communication protocol destination port number, the third QoS indication field, and the L2ID of the next-hop node, and generating the TCID of the transport channel.

6. The method according to claim 5, wherein after the generating, by the first device, the TCID of the transport channel, the method further comprises:
generating, by the first device, the second mapping relationship based on the one or more of the communication protocol source address, the communication protocol destination address, the communication protocol source port number, the communication protocol destination port number, or the second QoS indication field, the L2ID of the next-hop node, and the TCID of the transport channel.

7. The method according to any one of claims 1 to 6, wherein the second communication protocol is a standard short-range wireless communication protocol specified by SparkLink.

8. The method according to any one of claims 1 to 7, wherein types of the source network address and the destination network address are internet protocol IP addresses; and
types of the source transport layer port number and the destination transport layer port number are transmission control protocol TCP/user datagram protocol UDP port numbers.

9. A data transmission method, applied to a first device, wherein a protocol stack of a second communication protocol is deployed on the first device, and the method comprises:
transferring, by the first device, a first data packet from a first protocol layer of the protocol stack to a second protocol layer of the protocol stack, wherein the first data packet comprises data and first information, the first information comprises a source network address, a destination network address, a source transport layer port number, and a destination transport layer port number, and the first information corresponds to a first communication protocol;
determining, by the first device, second information at the second protocol layer of the protocol stack based on a first mapping relationship, wherein the second information corresponds to the second communication protocol, the second information comprises a communication protocol source address, a communication protocol destination address, a communication protocol source port number, and a communication protocol destination port number, and the first mapping relationship indicates a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number;
generating, by the first device, a second data packet at the second protocol layer of the protocol stack, wherein the second data packet comprises the data, the communication protocol source address, the communication protocol destination address, the communication protocol source port number, and the communication protocol destination port number; and
sending, by the first device, the second data packet at a third protocol layer of the protocol stack.

10. The method according to claim 9, wherein
the first mapping relationship is predefined; or
the first mapping relationship is generated by the first device at the second protocol layer of the protocol stack; or
the first mapping relationship is from a second device.

11. The method according to claim 9 or 10, wherein the first data packet further comprises a first quality of service QoS indication field, and the first QoS indication field comprises a differentiated services code point DSCP or a traffic of class Traffic of Class;
the first mapping relationship further indicates a mapping relationship between the first QoS indication field and a second QoS indication field, and the second QoS indication field comprises a flow label Flow Label and a type of service ToS; and
the second data packet further comprises the second QoS indication field.

12. The method according to claim 11, wherein the method further comprises:
determining, by the first device, a layer 2 identifier L2ID of a next-hop node to the communication protocol destination address and a transport channel identifier TCID of a transport channel between the first device and the next-hop node at the second protocol layer of the protocol stack based on one or more of the communication protocol source address, the communication protocol destination address, the communication protocol source port number, the communication protocol destination port number, or the second QoS indication field, wherein the transport channel meets a QoS requirement corresponding to the second QoS indication field; and
the sending, by the first device, the second data packet at a third protocol layer of the protocol stack comprises:
encapsulating, by the first device, the second data packet at the third protocol layer of the protocol stack based on the L2ID and the TCID to generate a third data packet, and sending, by the first device, the third data packet at the third protocol layer of the protocol stack.

13. The method according to claim 12, wherein the determining, by the first device, an L2ID of a next-hop node to the communication protocol destination address and a TCID of a transport channel between the first device and the next-hop node at the second protocol layer of the protocol stack based on one or more of the communication protocol source address, the communication protocol destination address, the communication protocol source port number, the communication protocol destination port number, or the second QoS indication field comprises:
determining, by the first device, the L2ID of the next-hop node to the communication protocol destination address and the TCID of the transport channel between the first device and the next-hop node at the second protocol layer of the protocol stack based on a second mapping relationship, wherein the second mapping relationship indicates a mapping relationship between the L2ID of the next-hop node and the TCID of the transport channel, and the one or more of the communication protocol source address, the communication protocol destination address, the communication protocol source port number, the communication protocol destination port number, or the second QoS indication field; or
determining, by the first device, the L2ID of the next-hop node to the communication protocol destination address at the second protocol layer of the protocol stack based on the communication protocol source address and/or the communication protocol destination address; mapping, by the first device, the second QoS indication field to a third QoS indication field at the third protocol layer of the protocol stack, establishing the transport channel with the next-hop node based on the communication protocol destination port number, the third QoS indication field, and the L2ID of the next-hop node, and generating the TCID of the transport channel; and transferring, by the first device, the TCID from the third protocol layer of the protocol stack to the second protocol layer of the protocol stack.

14. The method according to claim 13, wherein after the transferring, by the first device, the TCID from the third protocol layer of the protocol stack to the second protocol layer of the protocol stack, the method further comprises:
generating, by the first device, the second mapping relationship at the second protocol layer of the protocol stack based on the one or more of the communication protocol source address, the communication protocol destination address, the communication protocol source port number, the communication protocol destination port number, or the second QoS indication field, the L2ID of the next-hop node, and the TCID of the transport channel.

15. The method according to any one of claims 9 to 14, wherein the second communication protocol is a standard short-range wireless communication protocol specified by SparkLink.

16. The method according to any one of claims 9 to 15, wherein types of the source network address and the destination network address are internet protocol IP addresses; and
types of the source transport layer port number and the destination transport layer port number are transmission control protocol TCP/user datagram protocol UDP port numbers.

17. A data transmission method, comprising:
obtaining, by a first device, a data packet, wherein the data packet comprises data, a source address, a destination address, a source port number, a destination port number, and a QoS indication field;
determining, by the first device, a layer 2 identifier L2ID of a next-hop node to the destination address and a TCID of a transport channel between the first device and the next-hop node based on one or more of the source address, the destination address, the source port number, the destination port number, or the QoS indication field, wherein the transport channel meets a QoS requirement corresponding to the QoS indication field; and
encapsulating, by the first device, the data packet based on the L2ID and the TCID, and sending the encapsulated data packet.

18. The method according to claim 17, wherein the determining, by the first device, an L2ID of a next-hop node to the communication protocol destination address and a TCID of a transport channel between the first device and the next-hop node based on one or more of the source address, the destination address, the source port number, the destination port number, or the QoS indication field comprises:
determining, by the first device, the L2ID of the next-hop node to the destination address and the TCID of the transport channel between the first device and the next-hop node based on a second mapping relationship, wherein the second mapping relationship indicates a mapping relationship between the L2ID of the next-hop node and the TCID of the transport channel, and the one or more of the source address, the destination address, the source port number, the destination port number, or the QoS indication field; or
determining, by the first device, the L2ID of the next-hop node to the destination address based on the source address and/or the destination address; and establishing, by the first device, the transport channel with the next-hop node based on the destination port number, the QoS indication field, and the L2ID of the next-hop node, and generating the TCID of the transport channel.

19. The method according to claim 18, wherein after the generating, by the first device, the TCID of the transport channel, the method further comprises:
generating, by the first device, the second mapping relationship based on the one or more of the source address, the destination address, the source port number, the destination port number, or the QoS indication field, the L2ID of the next-hop node, and the TCID of the transport channel.

20. The method according to any one of claims 17 to 19, wherein types of the source address and the destination address are IP addresses, types of the source port number and the destination port number are TCP/UDP port numbers, and the QoS parameter is a DSCP or a traffic of class; or
types of the source address and the destination address are standard short-range wireless communication protocol addresses specified by SparkLink, types of the source port number and the destination port number are port numbers of a standard short-range wireless communication protocol specified by SparkLink, and the QoS parameter is a type of service ToS in the standard short-range wireless communication protocol specified by SparkLink.

21. The method according to any one of claims 17 to 20, wherein the types of the source address and the destination address are the IP addresses;
the destination address is an address of the next-hop node, and the encapsulated data packet comprises the L2ID, the TCID, the source address, and the destination address; or
the destination address is not an address of the next-hop node; and the encapsulated data packet comprises the L2ID, the TCID, the source address, the destination address, the standard short-range wireless communication protocol address specified by SparkLink corresponding to the source address, and the standard short-range wireless communication protocol address specified by SparkLink corresponding to the destination address.

22. A data transmission apparatus, comprising:
an obtaining unit, configured to obtain a first data packet, wherein the first data packet comprises data and first information, the first information comprises a source network address, a destination network address, a source transport layer port number, and a destination transport layer port number, and the first information corresponds to a first communication protocol;
a processing unit, configured to: determine second information based on a first mapping relationship, wherein the second information corresponds to a second communication protocol, the second information comprises a communication protocol source address, a communication protocol destination address, a communication protocol source port number, and a communication protocol destination port number, and the first mapping relationship indicates a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number; and generate a second data packet, wherein the second data packet comprises the data, the communication protocol source address, the communication protocol destination address, the communication protocol source port number, and the communication protocol destination port number; and
a sending unit, configured to send the second data packet.

23. A data transmission apparatus, comprising:
a first protocol layer module, configured to transfer a first data packet to a second protocol layer module, wherein the first data packet comprises data and first information, the first information comprises a source network address, a destination network address, a source transport layer port number, and a destination transport layer port number, and the first information corresponds to a first communication protocol;
the second protocol layer module, configured to: determine second information based on a first mapping relationship, wherein the second information corresponds to a second communication protocol, the second information comprises a communication protocol source address, a communication protocol destination address, a communication protocol source port number, and a communication protocol destination port number, and the first mapping relationship indicates a mapping relationship between the source network address and the communication protocol source address, a mapping relationship between the destination network address and the communication protocol destination address, a mapping relationship between the source transport layer port number and the communication protocol source port number, and a mapping relationship between the destination transport layer port number and the communication protocol destination port number; and generate a second data packet, wherein the second data packet comprises the data, the communication protocol source address, the communication protocol destination address, the communication protocol source port number, and the communication protocol destination port number; and
a third protocol layer module, configured to send the second data packet.

24. A data transmission apparatus, comprising:
an obtaining unit, configured to obtain a data packet, wherein the data packet comprises data, a source address, a destination address, a source port number, a destination port number, and a QoS indication field;
a processing unit, configured to: determine a layer 2 identifier L2ID of a next-hop node to the destination address and a TCID of a transport channel between the first device and the next-hop node based on one or more of the source address, the destination address, the source port number, the destination port number, or the QoS indication field, wherein the transport channel meets a QoS requirement corresponding to the QoS indication field; and encapsulate the data packet based on the L2ID and the TCID; and
a sending unit, configured to send the encapsulated data packet.

25. A data transmission apparatus, comprising at least one processor and an interface circuit, wherein
the interface circuit is configured to: receive a signal from an apparatus other than the apparatus and send the signal to the processor, or send a signal from the processor to an apparatus other than the apparatus, and the processor is configured to implement, by using a logic circuit or by executing code instructions, the method according to any one of claims 1 to 8, the method according to any one of claims 9 to 16, or the method according to any one of claims 17 to 21.

26. A computer-readable storage medium, wherein the storage medium stores a computer program or instructions, and when the computer program or the instructions are executed by a communication apparatus, the method according to any one of claims 1 to 8, the method according to any one of claims 9 to 16, or the method according to any one of claims 17 to 21 is implemented.

27. A computer program product, wherein the computer program product stores instructions, and when the instructions are run on a computer, the computer is enabled to perform the method according to any one of claims 1 to 8, the method according to any one of claims 9 to 16, or the method according to any one of claims 17 to 21.
